# DEMANDE DE BREVET EUROPEEN

(11) **EP 4 203 429 A1**
(43) Date de publication de la demande: **28.06.2023**
(21) Numéro de dépôt: 22214866.0
(22) Date de dépôt: 20.12.2022
(51) Int. Cl.: H04L 47/31, H04L 47/35

(54) **PROCÉDÉ DE TRAITEMENT D'UN PAQUET DE DONNÉES DANS UN RÉSEAU DE COMMUNICATIONS, PROCÉDÉ DE TRAITEMENT D'UNE DEMANDE DE CHANGEMENT DE NIVEAU DE QUALITÉ DE SERVICE D'UNE CONNEXION, PROCÉDÉ DE DEMANDE DE CHANGEMENT DE NIVEAU DE QUALITÉ DE SERVICE D'UNE CONNEXION, PROCÉDÉ DE GESTION D'UNE QUALITÉ DE SERVICE, DISPOSITIFS, SYSTÈME ET PROGRAMMES D ORDINATEUR CORRESPONDANTS**

(30) Priorité: 22.12.2021 FR 2114215
(71) Demandeur: Orange, 92130 Issy-les-Moulineaux (FR)
(72) Inventeur: KOUNTOURIS, Apostolos, 92326 Chatillon (FR); SURBAYROLE, Philippe, 92326 Chatillon (FR)
(74) Mandataire: Vidon Brevets & Stratégie

(57) **Abrégé**

L'invention concerne un procédé de traitement d'un paquet de données échangé entre un équipement terminal client et un équipement serveur dans un réseau de communications), auquel l'équipement client accède par l'intermédiaire d'un premier réseau de communications, un premier niveau de qualité de service étant destiné à être appliqué audit paquet de données. Selon l'invention, ledit procédé est mis en oeuvre par un équipement de routage dudit premier réseau de communications et comprend :
- la détection (61) dans ledit paquet de données d'au moins une information d'activation (AC_QOS) d'un deuxième niveau de qualité de service à appliquer audit paquet de données;
- l'obtention (62) d'une règle de gestion de la qualité de service (R_QoS2) selon le deuxième niveau de qualité de service, associée à ladite information d'activation (AC_QoS) ;
- l'application (63) du deuxième niveau de qualité de service à l'acheminement dit paquet de données selon la règle obtenue, à la place du premier niveau de qualité de service FIGURE 6

## Description

### 1. Domaine de l'invention

L'invention se situe dans le domaine des télécommunications, et notamment dans celui de la gestion de la qualité de service associée à un accès d'un équipement client à un réseau de communications.

En particulier, l'invention concerne le traitement de paquets de données échangés entre cet équipement client et un équipement serveur par l'intermédiaire du réseau de communications et la gestion d'une qualité de service pour l'acheminement de ces paquets de données dans le réseau de communications.

Elle s'applique notamment mais non exclusivement à un réseau de communications mettant en oeuvre le protocole de communications IP (de l'anglais, « Internet Protocol »).

### 2. Art antérieur et ses inconvénients

Actuellement, pour que deux équipements terminaux, par exemple deux ordinateurs, puissent échanger des données sur le réseau de communications internet, il faut que chacun d'eux ait préalablement souscrit à un contrat ou abonnement auprès d'un opérateur fournisseur d'accès internet ou FAI. Ce contrat leur permet de se connecter au réseau de communications de l'opérateur et, par l'intermédiaire de ce réseau, à Internet, dans des conditions de Qualité de Service ou QoS (de l'anglais, « Quality of Service ») données.

Selon une vision simplifiée, par exemple dans un réseau de communications tout IP, ces échanges se font entre un équipement client et un équipement serveur, sur la base de ce qu'on appelle des paquets de données IP qui partent d'une adresse IP source, par exemple celle de l'équipement client, vers une adresse IP destination, par exemple celle de l'équipement serveur.

On entend par niveau de qualité de service, un niveau de ressources alloué par le réseau pour l'acheminement des flux de données émis ou reçu par l'équipement en question, via le réseau de communication. Il peut être mesuré par différents types de mesures, comme par exemple un débit de données mesuré en bits/sec et/ou un volume de données mensuel en Mega-octets (en anglais, « MBytes) autorisé et/ou une quantité d'éléments de ressources, comme par exemple des d'unités de ressources fréquentielles PRB (de l'anglais « Physical Resource Blocks) dans un réseau d'accès radio cellulaire.

Très souvent, l'équipement client et l'équipement serveur ne bénéficient pas du même niveau de qualité de service. Il en résulte que la qualité de service de la connexion entre les deux équipements est limitée par le niveau de qualité de service le plus faible. Une telle limitation ou asymétrie peut à première vue sembler normale mais au fond elle constitue un frein au développement des activités numériques (e-commerce, e-learning, etc.) et va à l'encontre d'une vision moderne et inclusive de l'internet.

Toutefois, elle a pour conséquence de restreindre les possibilités d'accès de certains équipements clients à des services proposés par des équipements serveurs, ce qui peut présenter des inconvénients majeurs dans un monde de plus en plus dématérialisé et connecté, dans lequel on cherche à faciliter le commerce électronique, le télétravail et plus généralement à remplacer progressivement des processus classiques par leurs équivalents dématérialisés disponibles via l'Internet.

Par exemple, un équipement client de type téléphone intelligent (de l'anglais, « smartphone ») peut bénéficier d'un contrat à faible QoS, avec un faible volume de données mensuel autorisé. Une fois ce volume consommé, son accès au réseau Internet n'est plus autorisé ou au mieux il est réduit à un très faible débit de données, qui ne lui permet plus de se connecter à un site marchand ou de bénéficier d'une consultation de télémédecine ou pour un jeune qui dispose d'un forfait réduit ou bloqué d'accéder à l'école à distance, etc.

On comprend que, de plus en plus, cette asymétrie de QoS et les limitations qu'elle entraîne sur le niveau de qualité de service effectif de la connexion entre l'équipement client et l'équipement serveur sont perçues comme un frein au développement des services en ligne. Elle pousse notamment des géants de l'informatique et du commerce électronique à travailler sur des solutions alternatives, basées par exemple des infrastructures réseau propriétaires qui leur permettraient d'atteindre tous ces potentiels clients. L'émergence de telles solutions risque, à terme, de mettre les opérateurs de réseaux de télécommunications en difficulté sur leurs propres marchés.

L'invention vient améliorer la situation.

### 3. Présentation de l'invention

L'invention répond à ce besoin en proposant un procédé de traitement d'un paquet de données échangé entre un équipement terminal client et un équipement serveur d'un réseau de communications, auquel l'équipement client accède par l'intermédiaire d'un premier réseau de communications, un premier niveau de qualité de service étant destiné à être appliqué audit paquet de données.

Ledit procédé est mis en oeuvre par un équipement de routage dudit premier réseau de communications et comprend :
- la détection dans ledit paquet de données d'au moins une information d'activation d'un deuxième niveau de qualité de service à appliquer audit paquet de données;
- l'obtention d'une règle de gestion de la qualité de service selon le deuxième niveau de qualité de service, associée à ladite information d'activation ; et
- l'application du deuxième niveau de qualité de service à l'acheminement dit paquet de données selon la règle obtenue, à la place du premier niveau de qualité de service.

L'invention propose ainsi une approche tout-à-fait nouvelle et inventive de la gestion de la qualité de service d'une communication entre un équipement client et un équipement serveur qui accèdent chacun à un réseau de communication avec des niveaux de qualité de service distincts. Elle consiste à définir pour l'équipement client, un deuxième niveau de qualité de service destiné à être appliqué aux échanges de données entre l'équipement client et l'équipement serveur, dans le cadre de cette connexion. Contrairement à l'art antérieur, le niveau de qualité de service à mettre en oeuvre pour l'acheminement des données depuis et vers l'équipement client n'est plus, comme le fait l'art antérieur, celui fixé par l'abonnement auquel l'utilisateur de l'équipement client a souscrit auprès de son fournisseur d'accès à Internet, mais ce deuxième niveau de qualité de service spécifiquement déterminé par un contrat souscrit par l'utilisateur ou l'entreprise qui gère l'équipement serveur.

La règle de gestion de la qualité de service selon le deuxième niveau de qualité de service peut avoir été obtenue au préalable et stockée en mémoire. Par exemple, elle a été installée par une entité de gestion de la qualité de service du premier réseau configurée pour gérer le mécanisme de mise à jour d'une connexion d'un équipement terminal selon l'invention et répondre à une requête de mise à jour de la connexion d'un équipement client. Lorsqu'il a été établi que la requête est valide, l'entité installe la règle dans l'équipement de routage ou la stocke en mémoire.

De la sorte, l'invention permet de déclencher une gestion de qualité de service spécifique pour des communications entre un client et un serveur, déterminée par la destination (le serveur) qui vient se substituer à la gestion de qualité de service prévue par le contrat souscrit par l'utilisateur de l'équipement client (la source)..

Elle propose ainsi une solution de connexion facilitée, qui vient rééquilibrer l'asymétrie existant entre le niveau de qualité de service auquel a droit l'équipement client et celui, plus élevé, de l'équipement serveur et offre à l'équipement client un meilleur accès aux services de l'équipement serveur.

L'invention pose ainsi les bases d'un nouveau service de télécommunications qui trouverait de nombreuses applications, que ce soit pour le commerce en ligne, l'enseignement à distance, la télémédecine. Elle trouve aussi des applications dans relations B2B, par exemple pour assurer un accès homogène à un réseau privé, par exemple VPN, d'entreprise pour tous les collaborateurs. Elle est particulièrement intéressante pour les réseaux de communications, pour lesquels, indépendamment de l'infrastructure physique disponible pour accéder au réseau de communication (internet), des niveaux de qualité de service différenciées sont proposés aux clients en fonction du contrat auquel ils souscrivent. Il s'agit par exemple de réseaux d'accès radio cellulaires de 4^{ème} génération ou suivantes ou de réseaux d'accès haut débit IP/xDSL ou IP/PON. Selon un aspect de l'invention, l'information d'activation d'un deuxième niveau de qualité de service comprend une information d'identification d'une source du paquet de données et une information d'identification d'une destination du paquet de données.

Un avantage est que l'information d'activation est une information comprise dans un champ d'information déjà présent dans le flux de données. La détection de ce couple d'adresses suffit à déclencher la vérification auprès de la table de données que le paquet de données reçu est à traiter selon le deuxième niveau de qualité de service. Un avantage est qu'il n'est pas nécessaire d'ajouter de l'information supplémentaire dans le flux de données.

Selon un autre aspect de l'invention, l'information d'activation d'un deuxième niveau de qualité de service comprend un jeton de connexion.

Avantageusement, le jeton de connexion est obtenu spécifiquement pour la communication entre l'équipement client et l'équipement serveur, ce qui offre d'une part un niveau de sécurité accru et aussi une plus grande flexibilité. Il est inséré dans chaque paquet de données émis par l'équipement serveur ou par l'équipement client et sa détection permet à l'équipement de routage du premier réseau de communication de traiter le paquet de données avec les spécifications de QoS (deuxième niveau de qualité de service) déterminées par l'équipement serveur pour les équipements clients qui communiquent avec lui, en fonction de l'abonnement spécifique auquel il a souscrit auprès de son fournisseur d'accès internet.

En outre, il peut avantageusement être associé à une période de validité dans la table de données, ce qui facilite la vérification des droits par l'équipement de contrôle du réseau d'accès. Un autre avantage est qu'il permet de spécifier un niveau de qualité de service pour les flux de données échangés entre l'équipement client et l'équipement serveur, indépendamment de l'adresse de destination du flux de données. Il offre donc une plus grande flexibilité et il est en particulier bien adapté au cas d'une connexion VPN d'un équipement client d'un collaborateur à l'équipement serveur de son employeur.

Selon encore un autre aspect de l'invention, ladite règle de gestion de la qualité de service comprend une information relative à un type de service et l'application de ladite règle comprend l'insertion de ladite information dans un en-tête du paquet de données.

L'invention définit ainsi un type ou classe de service supplémentaire destiné à être directement utilisé par d'autres équipements routeurs d'autres réseaux traversés par le paquet de données et gérés par d'autres opérateurs. L'avantage d'une telle classe de service, normalisée, est qu'elle est partagée et connue de tous les réseaux ainsi que les conditions de traitement à appliquer au paquet de données qui la porte.

Avantageusement, dans une architecture de réseau de type DiffServ, mettant en oeuvre une gestion de la qualité de service basée sur différentes classes de services, l'information de type de service est insérée dans le champ d'information ToS d'un paquet de données IP et elle est détectée et exploitée par les équipements de routage du réseau de communication pour traiter le paquet de données conformément aux conditions spécifiées par l'information de type de service détectée. Il s'agit d'une infrastructure protocolaire existante, il n'est donc pas nécessaire de modifier le fonctionnement des équipements routeurs.

Selon encore un autre aspect de l'invention, le procédé comprend l'obtention d'une information de comptage d'une quantité de ressources allouées pour l'acheminement dudit flux en application du deuxième niveau de qualité de service et l'enregistrement de ladite information. Un avantage est de pouvoir facturer le fournisseur d'accès au réseau de l'utilisateur de l'équipement serveur pour les ressources réseau mises en oeuvre pour appliquer le deuxième niveau de qualité de service (nombre de connexions, volume des données par connexion et par entité gestionnaire du ou des équipements serveurs etc.). Par exemple, les ressources supplémentaires mises en oeuvre par rapport à une gestion classique de la qualité de service sont évaluées. Avantageusement, les informations de comptage sont transmises à une entité de gestion de la qualité de service dédiée à la gestion des connexions facilitées selon l'invention, laquelle se charge de les collecter en provenance des différents équipements de routage impliqués et de les mettre en oeuvre la politique de facturation du réseau d'accès de l'équipement serveur.

L'invention permet ainsi de proposer un nouveau service de télécommunications basé sur le principe de l'invention et une politique de facturation inter-opérateurs de réseaux de communications. Des accords entre fournisseurs d'accès, de type de ceux existants pour gérer la mobilité des utilisateurs (accords d'itinérance (en anglais, « roaming »)) pourraient faciliter la mise en oeuvre d'un tel service.

L'invention concerne également un dispositif de traitement d'un paquet de données échangé entre un équipement terminal client et un équipement serveur par l'intermédiaire d'un réseau de communications, auquel l'équipement client accède par l'intermédiaire d'un premier réseau de communications, un premier niveau de qualité de service étant destiné à être appliqué audit paquet de données dans le premier réseau, ledit dispositif étant configuré pour mettre en oeuvre au niveau d'un équipement de routage dudit premier réseau de communications :
- la détection dans ledit paquet de données d'au moins une information d'activation d'un deuxième niveau de qualité de service, ledit deuxième niveau de qualité de service étant applicable à des paquets de données échangés avec ledit équipement serveur ;
- l'obtention d'une règle de gestion de la qualité de service selon le deuxième niveau de qualité de service, associée à ladite information d'activation ; et
- l'application du deuxième niveau de qualité de service à l'acheminement dit paquet de données selon la règle obtenue, à la place du premier niveau de qualité de service.

Avantageusement, ledit dispositif configuré pour mettre en oeuvre les étapes du procédé de traitement tel que décrit précédemment.

Avantageusement, ledit dispositif est intégré dans un équipement de routage du premier réseau de communications.

Avantageusement, ledit équipement de routage est compris dans un système de gestion de la gestion de la qualité de service appliquée à des paquets de données échangés entre un équipement client et un équipement serveur dans un réseau de communications, auquel ledit équipement client accède par l'intermédiaire d'un premier réseau de communications. Le système, l'équipement de routage et le dispositif de traitement présentent au moins les mêmes avantages que ceux conférés par le procédé de traitement précité.

Corrélativement, l'invention concerne aussi un procédé de traitement d'une demande de changement de niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, ladite demande étant reçue par l'équipement serveur.

Ledit procédé est mis en oeuvre par l'équipement serveur et comprend, sur réception de ladite demande de changement de niveau de qualité de service :
- la décision d'accepter ou non la demande de changement de niveau de qualité de service reçue ;
- lorsqu'il a été décidé d'accepter la demande de changement de qualité de service, l'enregistrement dans une table de données, dite de gestion des connexions, accessible depuis le réseau de communications, d'au moins une information d'activation d'un deuxième niveau de qualité de service applicable à l'acheminement des paquets de données échangés entre ledit équipement client et ledit équipement serveur ;
- la transmission d'une réponse à l'équipement client.

La demande de changement de niveau de qualité de service peut être implicite ou explicite. Avec l'invention, l'équipement serveur décide s'il accepte ou non la demande de l'équipement client d'accéder au deuxième niveau de qualité de service pour communiquer avec lui. Par exemple, il prend cette décision en fonction d'un nombre de connexions en cours avec d'autres équipements clients et d'un nombre maximal de connexions autorisées simultanément. Lorsque sa décision est positive, il déclare une information d'activation de ce deuxième niveau de qualité de service pour la connexion avec l'équipement client dans une table de données accessible depuis le réseau de communication, afin que le réseau de communication puisse accéder à cette information et appliquer la ou les règles de gestion de qualité de service spécifiques à ce deuxième niveau de qualité de service. Cette table de données comprend des entrées associant cette information d'activation d'un deuxième niveau de qualité de service à une information d'identification de l'équipement serveur.

On note que la demande de changement de niveau de qualité de service peut être transmise à l'équipement serveur de différentes façons. Par exemple, l'équipement client se connecte à l'équipement serveur et affiche une page web de cet équipement serveur sur l'écran de l'équipement client. L'utilisateur clique alors sur un bouton pour déclencher l'émission de la demande de changement de niveau de qualité de service.

Selon un autre aspect de l'invention, le procédé comprend en outre :
- l'obtention d'un jeton de connexion,
- l'enregistrement dudit jeton de connexion en tant qu'information d'activation du deuxième niveau de qualité de service dans la table de données en association avec ladite information d'identification de l'équipement serveur ; et
- la réponse à l'équipement client comprend ledit jeton de connexion.

Un avantage du jeton de connexion est qu'il permet d'identifier facilement la connexion à mettre à jour. Il peut avantageusement être spécifiquement calculé pour chaque nouvelle demande acceptée. Il s'agit par exemple d'un code de hachage dont le calcul peut avantageusement faire intervenir des informations d'identification et ou de localisation temporelle et spatiale de l'équipement client. Il est envoyé à l'équipement client pour qu'il puisse mettre à jour sa connexion auprès de l'équipement de contrôle du réseau et pour qu'il puisse ensuite étiqueter les paquets de données émis à destination du flux de données.

L'invention concerne également un dispositif de traitement d'une demande de changement de niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, ladite demande étant reçue par un équipement serveur en provenance de l'équipement client. Ledit dispositif est configuré pour mettre en oeuvre au niveau de l'équipement serveur :
- la décision d'accepter ou non la demande de changement de niveau de qualité de service reçue ;
- lorsqu'il a été décidé d'accepter la demande de changement de niveau de qualité de service reçue, l'enregistrement dans une table de données, dite de gestion des connexions, d'au moins une information de validation d'un deuxième niveau de qualité de service applicable à l'acheminement des flux échangés dans le cadre d'une communication entre ledit équipement client et ledit équipement serveur.

Avantageusement, ledit dispositif configuré pour mettre en oeuvre les étapes du procédé de traitement d'une demande de changement tel que décrit précédemment.

Avantageusement, ledit dispositif est intégré dans l'équipement serveur.

Avantageusement, ledit équipement serveur est compris dans un système de gestion de la qualité de service appliquée à des paquets de données échangés entre un équipement client et un équipement serveur dans un réseau de communications, auquel ledit équipement client accède par l'intermédiaire d'un premier réseau de communications. Le système, l'équipement serveur et le dispositif de traitement d'une demande de changement présentent au moins les mêmes avantages que ceux conférés par le procédé de traitement d'une demande de changement précité.

Corrélativement, l'invention concerne aussi un procédé de demande de changement d'un niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion. Ledit procédé comprend :
- la réception d'une réponse en provenance de l'équipement serveur, ladite réponse comprenant une information d'activation d'un deuxième niveau de qualité de service, ledit deuxième niveau de qualité de service étant applicable aux paquets de données échangés entre l'équipement client et l'équipement serveur ;
- l'émission d'une demande de mise à jour de la connexion à un équipement de contrôle dudit réseau de communication, ladite demande de mise à jour comprenant ladite information d'activation d'un deuxième niveau de qualité de service ;
- l'insertion de l'information d'activation d'un deuxième niveau de qualité de service dans un paquet de données et l'émission dudit paquet de données dans le premier réseau de communications.

Selon l'invention, l'équipement client demande à bénéficier du deuxième niveau de priorité à l'équipement serveur. En cas de réponse positive, il obtient une information d'activation de ce deuxième niveau de priorité, qu'il adresse à un équipement de gestion de la qualité de service du premier réseau de communication pour qu'il mette à jour sa connexion au réseau de communication. De la sorte, les flux de données échangés avec l'équipement serveur seront traités avec le deuxième niveau de priorité, en lieu et place du premier niveau de priorité auquel sa connexion habituelle lui donne droit.

L'invention concerne également un dispositif de demande de changement d'un niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, ledit dispositif étant configuré pour mettre au niveau de l'équipement client:
- la réception d'une réponse en provenance de l'équipement serveur, ladite réponse comprenant une information d'activation d'un deuxième niveau de qualité de service, ledit deuxième niveau de qualité de service étant applicable aux paquets de données échangés entre l'équipement client et l'équipement serveur ;
- l'émission d'une demande de mise à jour de la connexion à un équipement de contrôle dudit réseau de communication, ladite demande de mise à jour comprenant ladite information d'activation d'un deuxième niveau de qualité de service ;
- l'insertion de l'information d'activation d'un deuxième niveau de qualité de service dans un paquet de données et l'émission dudit paquet de données dans le premier réseau de communications.

Avantageusement, ledit dispositif est configuré pour mettre en oeuvre les étapes du procédé de demande de changement tel que décrit précédemment.

Avantageusement, ledit dispositif est intégré dans l'équipement client.

Avantageusement, ledit équipement client est compris dans un système de gestion de la qualité de service appliquée à des paquets de données échangés entre un équipement client et un équipement serveur dans un réseau de communications, auquel ledit équipement client accède par l'intermédiaire d'un premier réseau de communications. Le système, l'équipement client et le dispositif de demande de changement présentent au moins les mêmes avantages que ceux conférés par le procédé de demande de changement précité.

Corrélativement l'invention concerne aussi un procédé de gestion d'une qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion. Ledit procédé est avantageusement mis en oeuvre par une entité de gestion de la qualité de service du premier réseau et comprend :
- la réception en provenance de l'équipement client d'une demande de mise à jour de ladite connexion pour l'acheminement de paquets de données échangés entre ledit équipement client et ledit équipement serveur;
- la détection d'une information d'activation du deuxième niveau de qualité de service dans ladite demande de mise à jour ;
- la vérification d'une validité de l'information d'activation, par interrogation d'une table de données, dite table de gestion des connexions, au moins à partir de ladite information d'activation et d'une information d'identification de l'équipement serveur; et
- l'installation d'une règle de gestion de la qualité de service selon le deuxième niveau de qualité de service associée à ladite information d'activation du deuxième niveau de qualité de service pour ladite connexion et
- la transmission d'une réponse à l'équipement client.

La connexion de l'équipement terminal au réseau de communications est ainsi mise à jour par l'installation d'une nouvelle règle de gestion de la qualité de service, pour que le deuxième niveau de qualité de service soit déclenché à la place du premier niveau de qualité de service pour les paquets de données échangés entre l'équipement client et l'équipement serveur. Un avantage de l'invention est qu'elle permet de faire cohabiter au sein du même accès d'un équipement client au réseau de communications, la gestion de deux niveaux de qualité de service distincts, le premier correspondant au niveau de qualité de service prévu par le contrat auquel a souscrit l'équipement client (la source) pour accéder au réseau de communications et le deuxième étant spécifique à une connexion avec un équipement serveur particulier, et défini par un contrat spécifique souscrit par cet équipement serveur (la destination) auprès d'un opérateur pour gérer l'accès de ses clients.

Cette nouvelle règle de gestion de la qualité de service n'est installée qu'après vérification de la validité de l'information d'activation reçue de l'équipement client. Avantageusement, la table de données de gestion des connexions est interrogée à l'aide de l'information d'activation et d'une information de l'équipement serveur.

Avantageusement, la réponse obtenue comprend une information de validité est associée à l'information d'activation. Par exemple l'information de validité est une information binaire, qui vaut 0 lorsque l'information d'activation n'est pas valide et 1 lorsqu'elle est valide. Avantageusement, elle comprend en outre une information de durée de validité, par exemple égale à une heure. De la sorte, l'entité de gestion de la qualité de service peut définir une durée de validité de la règle de gestion de la qualité de service alignée avec cette durée. Avantageusement, la réponse comprend en outre la règle de gestion de la qualité de service à appliquer au paquet de données courant.

L'invention concerne également un dispositif de gestion d'une qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion. Avantageusement, ledit dispositif est configuré pour mettre en oeuvre au niveau d'une entité de gestion de la qualité de service du premier réseau :
- la réception en provenance de l'équipement client d'une demande de mise à jour de ladite connexion pour l'acheminement de paquets de données échangés entre ledit équipement client et ledit équipement serveur;
- la détection d'une information d'activation du deuxième niveau de qualité de service dans ladite demande de mise à jour ;
- la vérification d'une validité de l'information d'activation, par interrogation d'une table de données, dite table de gestion des connexions, au moins à partir de ladite information d'activation et d'une information d'identification de l'équipement serveur; et
- lorsqu'il a été vérifié que l'information d'activation est valide, l'enregistrement de l'information d'activation dans une mémoire en association avec l'information d'identification de l'équipement serveur et une information d'identification de l'équipement client ;
- l'installation d'une règle de gestion de la qualité de service associée au deuxième niveau de qualité de service pour ladite connexion et
- la transmission d'une réponse à l'équipement client.

Avantageusement, ledit dispositif est configuré pour mettre en oeuvre les étapes du procédé de gestion tel que décrit précédemment.

Avantageusement, ledit dispositif est intégré dans l'entité de gestion de la qualité de service. Avantageusement, l'entité de gestion de la qualité de service est intégrée dans le système précité. Le système, l'entité de gestion et le dispositif de gestion présentent au moins les mêmes avantages que ceux conférés par le procédé de gestion précité.

L'invention concerne également des produits programmes d'ordinateur comprenant des instructions de code de programme pour la mise en oeuvre respective des procédés de traitement d'un paquet de données, de traitement d'une demande de changement d'un niveau de qualité de service, de demande de changement d'un niveau de qualité de service et de gestion d'une qualité de service tels que décrit précédemment, lorsqu'ils sont exécutés par un processeur.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise également au moins un support d'enregistrement lisible par un ordinateur sur lequel sont enregistrés des programmes d'ordinateur comprenant des instructions de code de programme pour l'exécution des étapes des procédés selon l'invention tel que décrits ci-dessus. Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet.

Alternativement, le ou les supports d'enregistrement peuvent être un ou des circuits intégrés dans lesquels chaque programme est incorporé, le ou les circuits étant adaptés pour exécuter ou pour être utilisé dans l'exécution du ou des procédés précités.

Selon un exemple de réalisation, la présente technique est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en oeuvre ses propres modules logiciels.

Les différents modes de réalisation mentionnés ci-dessus sont combinables entre eux pour la mise en oeuvre de la présente technique.

### 4. Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****]** : la figure 1 illustre de façon schématique une connexion établie entre un équipement client et un équipement serveur dans un réseau de communication, selon un mode de réalisation de l'invention ;
**[****Fig. 1A****]** : la figure 1A illustre de façon schématique un exemple d'architecture d'un premier réseau de communications par l'intermédiaire duquel l'équipement client accède au réseau de communications et se connecte à l'équipement serveur selon un mode de réalisation de l'invention ;
**[****Fig. 2****]** : la figure 2 illustre de façon schématique un exemple d'architecture d'un système de gestion d'une connexion d'un tel équipement terminal selon un mode de réalisation de l'invention ;
**[****Fig. 3****]** : la figure 3 décrit sous forme d'un logigramme les étapes d'un procédé de demande de changement d'un niveau de qualité de service d'une connexion d'un équipement client à un réseau de communication selon un mode de réalisation de l'invention ;
**[****Fig. 4****]** : la figure 4 décrit sous forme d'un logigramme les étapes d'un procédé de traitement d'une demande de changement d'un niveau de qualité de service d'une connexion d'un équipement client à un réseau de communication selon un mode de réalisation de l'invention ;
**[****Fig. 5****]** : la figure 5 décrit sous forme d'un logigramme les étapes d'un procédé de traitement d'un paquet de données échangés par l'équipement client et l'équipement serveur selon un mode de réalisation de l'invention ;
**[****Fig. 5A****]** :la figure 5A illustre de façon schématique un exemple de structure d'un en-tête d'un paquet de données IP selon un mode de réalisation de l'invention ;
**[****Fig. 6****]** : la figure 6 décrit sous forme d'un logigramme les étapes d'un procédé de gestion d'une qualité de service d'une connexion entre l'équipement client et l'équipement serveur selon un mode de réalisation de l'invention ;
**[****Fig. 7****]** : la figure 7 illustre de façon schématique un diagramme des messages échangés entre l'équipement serveur, l'équipement client et le réseau de communication selon un exemple de réalisation de l'invention ;
**[****Fig. 8****]** : la figure 8 illustre de façon schématique un exemple de structure matérielle d'un dispositif de traitement d'un flux de données selon un exemple de réalisation de l'invention ;
**[****Fig. 9****]** : la figure 9 illustre de façon schématique un exemple de structure matérielle d'un dispositif de traitement d'une demande de changement d'un niveau de qualité de service d'une connexion selon un exemple de réalisation de l'invention ;
**[****Fig. 10****]** : la figure 10 illustre de façon schématique un exemple de structure matérielle d'un dispositif de demande de changement d'un niveau de qualité de service d'une connexion selon un exemple de réalisation de l'invention ; et
**[****Fig. 11****]** : la figure 11 illustre de façon schématique un exemple de structure matérielle d'un dispositif de gestion d'une qualité de service d'une connexion entre l'équipement client et l'équipement serveur selon un exemple de réalisation de l'invention.

### 5. Description détaillée de l'invention

L'invention concerne un réseau de communications auquel accède un équipement client par l'intermédiaire d'un premier réseau de communications selon les conditions spécifiées un contrat souscrit par l'utilisateur de l'équipement client auprès d'un opérateur de ce premier réseau. Cet équipement client souhaite se connecter à un équipement serveur distant par l'intermédiaire de cet accès. Le contrat auquel l'utilisateur a souscrit, définit un premier niveau de qualité de service à appliquer à un flux de données que l'équipement client sera amené à échanger avec d'autres équipements terminaux dans le cadre de connexions applicatives, et en particulier dans le cadre de celle qu'il établit avec l'équipement serveur. Par exemple ce premier niveau de qualité de service définit un débit de données maximal dont l'équipement client devrait bénéficier au moins au niveau d'un premier saut qui l'amènerait en dehors du premier réseau d'accès opéré par son fournisseur d'accès.

Le principe général de l'invention repose sur l'insertion dans les paquets de données échangés avec l'équipement serveur d'une information d'activation d'un deuxième niveau de qualité de service et sur la prise en compte de cette information par un équipement de routage du premier réseau de communications pour acheminer ces paquets de données en leur appliquant le deuxième niveau de qualité de service, défini par un deuxième contrat souscrit par l'utilisateur de l'équipement serveur, à la place du premier niveau de qualité de service.

La mise en oeuvre de ce mécanisme, dit de connexion facilitée, comprend en outre une mise à jour préalable de la connexion de l'équipement client, par exemple par une entité de gestion de la qualité de service du premier réseau de communications. Elle s'appuie sur une vérification préalable de la validité de l'information d'activation insérée dans la requête de l'équipement auprès d'une table de données, dite de gestion des connexions, accessible depuis le réseau de communications et comprend l'installation d'une règle de gestion de la qualité de service correspondant au deuxième niveau de qualité de service.

L'invention permet donc d'appliquer des conditions de qualité de service spécifiques à échanges de données entre un équipement serveur et un équipement client dans le réseau de communications, en lieu et place de celles définies par contrat pour l'accès de l'équipement client au réseau de communications.

Dans la suite, on désigne génériquement par réseau de communication un réseau de communication de type Internet auquel peut accéder l'équipement terminal par un ou plusieurs réseaux d'accès à ce réseau et on considère que ce réseau de communications et ses réseaux d'accès sont basés IP, c'est-à-dire que tout type de trafic, par exemple voix, SMS, données, y est traité comme un trafic de paquets de données IP.

L'invention s'applique à tout type d'équipement terminal, fixe ou mobile, comprenant au moins une interface de communication avec un réseau de communication. Cette interface peut être filaire, comme par exemple une interface de type ADSL ou fibre, ou non filaire, comme par exemple une interface de type radio cellulaire, WLAN, BlueTooth, Zigbee, ou autre.

Dans la suite de la description, on désigne par équipement terminal (ou plus simplement parfois « terminal ») toute entité capable d'établir ou d'accepter l'établissement d'une communication reposant sur l'utilisation d'un ou plusieurs protocoles de transport, tels que TCP, UDP, ou QUIC par exemple. Il peut s'agir d'une entité physique, une entité virtuelle, ou d'une application logicielle embarquée dans l'équipement terminal.

L'équipement terminal qui initialise l'établissement d'une communication est généralement désigné par terminal émetteur ou équipement client, tandis que celui à qui est destinée la requête d'établissement est appelé terminal distant ou équipement serveur. Un même terminal peut donc agir à la fois comme client et serveur.

Dans la suite, on désigne par qualité de service ou QoS toute technologie mise en oeuvre par un réseau de communications pour gérer la transmission des données tout en réduisant les pertes de paquets, la gigue (de l'anglais, « jitter ») et la latence. Une telle technologie contrôle l'allocation des ressources du réseau et gère en particulier la bande passante, ou capacité maximale de transmission d'un point à un autre d'un volume de données pendant une période donnée, en hiérarchisant différentes applications entre elles ou différents types de données entre eux, ces applications ou types de données étant associés à différents niveaux de qualité de service. La gestion de la qualité de service s'appuie sur des mesures quantitatives de paramètres de performances.

La QoS est intégrée dans les contrats souscrits par les utilisateurs d'équipements terminaux qui souhaitent bénéficier d'un accès au réseau Internet sous la forme d'un accord de licence de service ou SLA (de l'anglais, « Service Licence Agreement »), qui garantit un niveau de performances donné pour un service donné.

Dans la suite, on désigne par ressources réseau aussi bien des ressources matérielles que des ressources logicielles au niveau du réseau coeur ou d'un réseau d'accès, par exemple d'un réseau d'accès radio mobile RAN (de l'anglais, « Radio Access Network ») au réseau de communication. Cette notion de ressource englobe l'équipement d'accès, comme un module de modulation de données, un module d'allocation d'intervalles de temps pour la transmission de données, un module de gestion de la qualité de service associée aux différents types de données transmises (voix, loT (de l'anglais, « Internet of Things »), vidéo, etc). Pour une station de base d'un réseau d'accès cellulaire par exemple, il s'agit par exemple de composants particuliers de cette antenne radio, tels que des unités de ressources PRB (de l'anglais, « Physical Ressource Block »), des modules de modulation, d'allocation d'intervalles de temps pour la transmission de données, de gestion de la qualité de service QoS (de l'anglais, « Quality of Service ») pour les différents types de données transmises, etc. La disponibilité de ces ressources est évaluée à partir d'informations de trafic de données relatives à une bande-passante, à un débit de données, à un volume de données, à un nombre d'unités de ressources fréquentielles ou PRB etc, déjà alloués ou au contraire disponibles, au niveau d'un équipement d'accès mobile tel qu'une station de base ou d'un équipement noeud d'un plan de transfert (ou « user plane », en anglais) du coeur de réseau.

L'invention trouve une application particulièrement intéressante lorsque l'infrastructure physique du premier réseau de communications auquel l'équipement terminal accède, lui permet techniquement d'accéder à un niveau de qualité de service élevé, en termes de débit de données maximal, par exemple de l'ordre du Gbit/sec (pour un accès fibre optique) ou de 150 Mbits/s (pour un accès radio cellulaire), mais le niveau de qualité de service auquel il a souscrit auprès de son fournisseur d'accès ne lui donne droit qu'à un niveau de qualité de service inférieur à ce débit maximal (par exemple 300 Mbits/s pour un premier niveau d'abonnement fibre optique ou 128 kbits/s pour un débit réduit une fois le volume de données mobiles mensuel consommé). Cette situation se présente classiquement dans le cas d'un réseau de communications mobiles. L'utilisateur de l'équipement terminal peut être localisé dans une zone de couverture radio qui lui donne techniquement accès à un niveau de qualité de service élevé, via une connexion 4G ou 5G par exemple, alors que son abonnement correspond en réalité à un niveau de qualité de service faible (volume de données mensuel faible ou nul, par exemple).

C'est le cas aussi avec un réseau de communications fixes et une technologie d'accès de type IP/xDSL ou IP/PON accessible avec différents abonnements associés à différents débits de données.

Dans la suite, on décrit de façon plus détaillée des modes de réalisation de l'invention dans un réseau de télécommunications mobiles, dont l'architecture est conforme à la norme 3GPP (dans une de ses versions actuelles ou futures) et met en oeuvre des équipements d'accès radio de type station de base et dans un réseau de communications fixes mettant en oeuvre une architecture de collecte haut débit de type IP/xDSL (de l'anglais « Digital Subscriber Line ») ou IP/PON (de l'anglais, « Passive Optical Network »). Bien sûr, et comme déjà évoqué, l'invention n'est pas limitée aux exemples décrits et s'applique aussi bien à d'autres types de réseaux de télécommunications fixes ou mobiles et à d'autres technologies d'accès, sans fil ou filaires. En conséquence, les équipements d'accès auquel l'équipement terminal client s'attache pour se connecter au réseau de communications comprennent de façon non restrictive une station de base, une femtocellule associée à cette station de base, un équipement multiplexeur d'accès à la ligne d'abonné numérique DSLAM (de l'anglais, « Digital Subscriber Line Access Multiplexeur ») pour un réseau d'accès de type ADSL, une borne d'accès Wifi (ou « hotspot », en anglais) ou un répéteur Wifi associé à cette borne, un équipement de terminaison de liaison optique ONT (de l'anglais, « Optical Network Termination ») pour un réseau d'accès fibre, de type PON (de l'anglais, « Passive Optical Network »), etc.

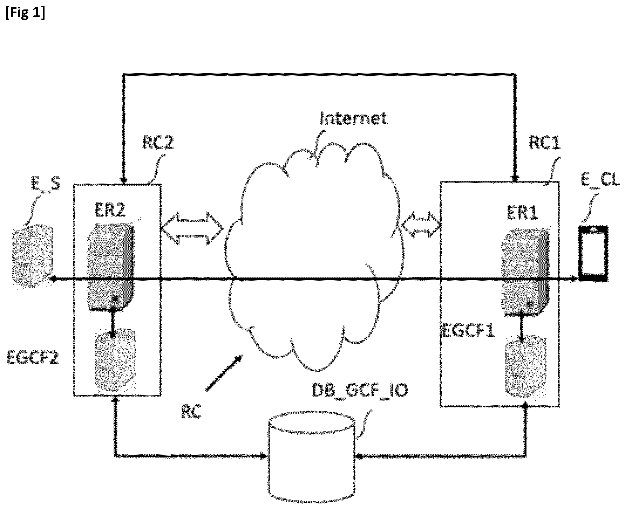

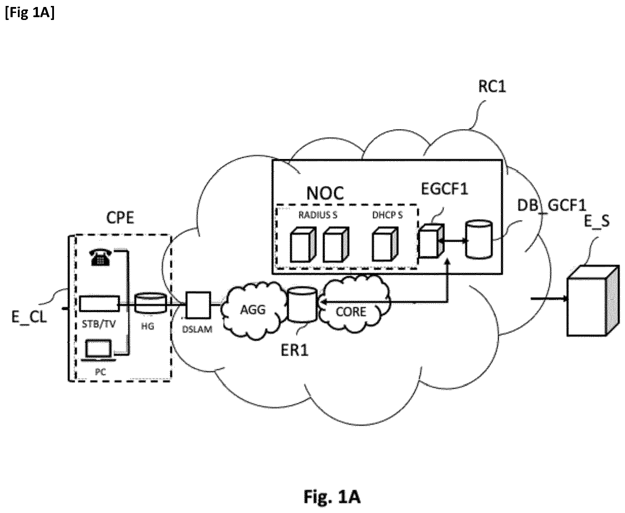

En relation avec la figure 1, on présente à titre illustratif un exemple simplifié d'architecture d'un réseau de communications RC, par exemple de type Internet, dans lequel se situe l'invention. On considère un équipement terminal client E_CL, tel que par exemple un téléphone mobile de type téléphone intelligent (pour « smartphone », en anglais), un ordinateur de type PC (pour « Personal Computer », en anglais) ou une tablette, qui accède au réseau de communications RC par l'intermédiaire d'un premier réseau d'accès RC1 opéré par un premier fournisseur d'accès. Pour ce faire, l'utilisateur de cet équipement terminal client a souscrit auprès de ce premier fournisseur d'accès, à un abonnement qui lui permet de se connecter au premier réseau d'accès RC1 avec un premier niveau de qualité de service QoS1. Par exemple, l'utilisateur a souscrit à un forfait mobile en 4G comprenant un volume mensuel de données de 50 GB et un débit de données maximal de 150 Mbit/s. Au-delà du volume mensuel, le débit de données est réduit à 128 kbits/s jusqu'à la fin de la période courante de facturation). En particulier, on suppose que cet équipement terminal E_CL utilise cet accès au réseau RC pour établir une communication avec un autre équipement terminal, par exemple l'équipement serveur E_S distant. On suppose que ce dernier accède au réseau de communications RC par l'intermédiaire d'un deuxième réseau d'accès RC2 d'un deuxième fournisseur d'accès. Dans la suite, on suppose que l'utilisateur ou l'entité qui gère l'équipement serveur E_S a souscrit un abonnement auprès de ce deuxième fournisseur d'accès avec un niveau de qualité de service QoS2 plus élevé que le premier niveau de qualité de service QoS1 dont bénéficie l'équipement terminal E_CL. Selon l'invention, cet abonnement est particulier en ce qu'il définit la possibilité de faire bénéficier à un nombre donné d'équipements clients qui demandent à établir une communication avec l'équipement serveur E_S par l'intermédiaire du réseau de communications, d'un deuxième niveau de qualité de service donné pour cette communication. L'équipement serveur E_S est par exemple un ordinateur doté de plusieurs interfaces de communication lui permettant d'établir plusieurs communications simultanées avec différents équipements clients. Son utilisateur est par exemple un professionnel, tel qu'une entreprise qui gère un site marchand, ou une plateforme de télémédecine, ou d'une plateforme d'enseignement à distance, etc.

Selon l'invention, l'équipement serveur E_S peut décider de valider ce deuxième niveau de service pour un équipement client E_CL qui se connecte à lui, sur requête de ce dernier ou de sa propre initiative. Pour ce faire, il doit valider ou activer le deuxième niveau de qualité de service pour cet équipement client auprès d'une entité de gestion de la qualité de service EGCF2 du deuxième réseau RC2. Avantageusement, celle-ci met à jour une table de données dédiée DB_GCF_IO, dite de gestion des connexions facilitées, accessible depuis le réseau de communications RC par le premier réseau RC1 et par le deuxième réseau RC2. On note que l'enregistrement de l'information d'activation du deuxième niveau de qualité de service dans la table de données DB_GCF_IO peut alternativement être mise en oeuvre directement par l'équipement serveur E_S lui-même ou par un premier équipement routeur ER2 du deuxième réseau d'accès RC2, qui est nativement configuré pour contrôler le trafic émis ou reçu par l'équipement serveur E_S et lui appliquer la politique de gestion de la qualité de service défini par contrat avec le fournisseur d'accès du deuxième réseau.

Côté premier réseau RC1, l'activation du deuxième niveau de qualité de service QoS2 pour l'équipement client nécessite une mise à jour des règles de gestion de la qualité de service associée à la connexion de l'équipement terminal E_CL au premier réseau d'accès RC1. Selon l'invention, cette mise à jour est mise en oeuvre par une entité de gestion de la qualité de service EGCF1 du premier réseau d'accès configurée pour accéder à la table de données DB_GCF_IO et à vérifier par ce biais que l'équipement client bénéficie de cette mise à jour et la configurer auprès d'un premier équipement de routage ER1 du premier réseau RC1, nativement configuré pour contrôler le trafic en provenance et à destination de l'équipement client E_CL et appliquer la politique de gestion de qualité de service adaptée.

La figure 1A illustre de façon schématique un exemple de premier réseau de communications RC1 dont l'architecture est de type IP/xDSL. L'équipement client E_CL, par exemple un téléphone intelligent, un décodeur TV ou STB (de l'anglais, « Set TopBox) ou un ordinateur PC (de l'anglais, « Personal Computer ») est connecté à un équipement d'accès au premier réseau RC1, par exemple une passerelle domestique HG. L'équipement client E_CL et l'équipement d'accès HG forment ainsi un équipement de type CPE (de l'anglais, « Customer Premise Equipment ») qui est connecté à un premier équipement DSLAM du réseau RC1. On considère en particulier l'équipement de routage ER1 qui dans cet exemple est une passerelle de type BNG (de l'anglais, « Broadband Network Gateway »). Cet équipement est nativement configuré pour contrôler et filtrer le trafic de données entrant et sortant pour l'équipement client E_CL.

Selon cet exemple d'architecture, on considère aussi un centre d'opérations réseau NOC (de l'anglais, « Network Operations Center ») dans lequel on regroupe classiquement des équipements de type serveur d'authentification de type Radius et de type serveur DHCP. Selon ce mode de réalisation de l'invention, il comprend en outre l'entité de gestion de la qualité de service EGCF1 configurée pour gérer les connexions qui bénéficient d'une mise à jour de leur qualité de service selon le principe de l'invention (« connexion facilitée »). Avantageusement, le centre NOC compte aussi une mémoire comprenant une table de données DB_GCF1 dans laquelle sont stockées des informations relatives aux connexions applicatives qui bénéficient de cette mise à jour. Il s'agit avantageusement d'une recopie locale d'informations obtenues de la table de données DB_GCF_IO inter opérateurs selon l'invention.

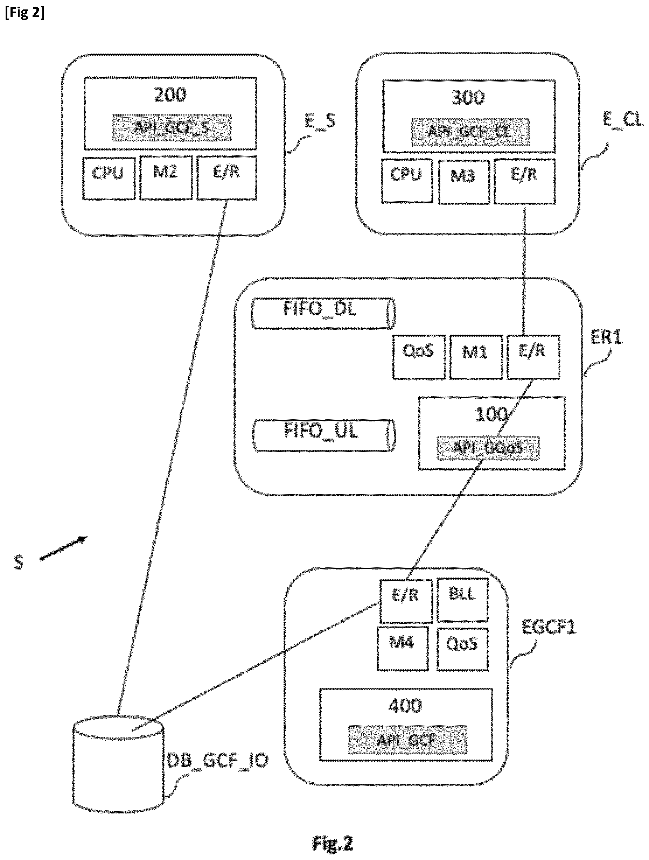

La figure 2 illustre de façon schématique un exemple d'architecture d'un système S pour la gestion de la qualité de service à appliquer à des paquets de données échangés entre un équipement client et un équipement serveur par l'intermédiaire d'un réseau de télécommunications, selon un mode de réalisation de l'invention, par exemple dans l'environnement de la figure 1 et/ou de la figure 1A.

Selon ce mode de réalisation de l'invention, le système S comprend l'équipement terminal client E_CL, l'équipement serveur E_S, l'équipement de routage ER1 du premier réseau d'accès RC1 configuré pour contrôler le trafic de données entre l'équipement client E_CL et le premier réseau RC1, l'entité de gestion EGCF1 et la table de gestion des connexions DB_GCF_IO. On suppose que l'équipement terminal E_CL accède au réseau de communications RC par l'intermédiaire du premier réseau d'accès RC1 avec un premier niveau de qualité de service et souhaite se connecter à l'équipement serveur via le réseau de communications RC.

Selon cet exemple de réalisation de l'invention, l'équipement client E_CL comprend un dispositif 300 de demande de mise à jour d'une connexion, configuré pour demander une mise à jour de sa connexion applicative à l'équipement serveur, obtenir, en provenance de l'équipement serveur, une réponse comprenant une information d'activation d'un deuxième niveau de qualité de service, ledit deuxième niveau de qualité de service étant applicable aux paquets de données échangés entre l'équipement client et l'équipement serveur, émettre une demande de mise à jour de la connexion à destination de l'équipement de gestion de la qualité de service EGCF1 du premier réseau de communication, ladite demande de mise à jour comprenant ladite information d'activation d'un deuxième niveau de qualité de service et recevoir une réponse positive ou négative..

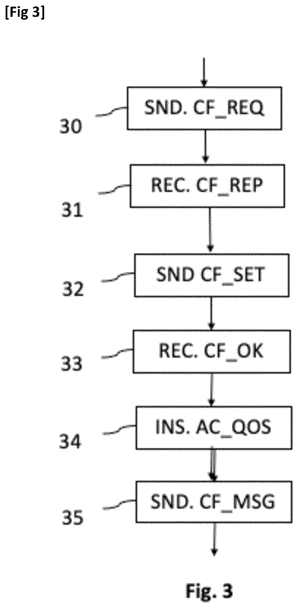

Le dispositif 300 met ainsi en oeuvre le procédé de demande de mise à jour d'une connexion qui sera détaillé ci-après en relation avec la figure 3.

Selon un mode de réalisation, il est implémenté sous la forme d'une application logicielle API_GCF_CL de type API (pour « Application Programming Interface », en anglais), installée sur l'équipement client E_CL. Avantageusement, cette application est dédiée à la mise en oeuvre d'une communication avec l'équipement serveur E_S.

Avantageusement, l'équipement terminal E_CL présente la structure matérielle d'un ordinateur et comprend un processeur CPU, une mémoire M3 dans laquelle sont par exemple stockés des programmes d'ordinateur, ainsi qu'un module d'émission/réception E/R qui lui permet de communiquer par au moins une interface avec le premier réseau de communications RC1 avec d'autres équipements terminaux, tels que l'équipement serveur E_S.

Alternativement, le dispositif 300 peut être indépendant de l'équipement terminal E_CL, mais connecté à celui-ci par une liaison quelconque, filaire ou non. Par exemple, il peut être embarqué dans n'importe quel équipement d'accès de type CPE (de l'anglais, « Customer Premise Equipment ») à un réseau de communication, tel qu'une passerelle résidentielle, par l'intermédiaire duquel l'équipement client E_CL se connecte au réseau d'accès RC1.

Dans cet exemple de réalisation, l'entité de gestion de la qualité de service EGCF1 comprend un dispositif 400 de mise à jour d'une connexion, configuré pour recevoir en provenance de l'équipement client une demande de mise à jour de ladite connexion pour l'acheminement de paquets de données échangés entre ledit équipement client et ledit équipement serveur, détecter une information d'activation du deuxième niveau de qualité de service dans ladite demande de mise à jour, vérifier une validité de l'information d'activation, par interrogation d'une table de données, dite table de gestion des connexions DB_GCF_IO , au moins à partir de ladite information d'activation et d'une information d'identification de l'équipement serveur, enregistrer l'information d'activation dans une mémoire en association avec l'information d'identification de l'équipement serveur et une information d'identification de l'équipement client, installer une règle de gestion de la qualité de service associée au deuxième niveau de qualité de service pour ladite connexion et transmettre une réponse à l'équipement client.

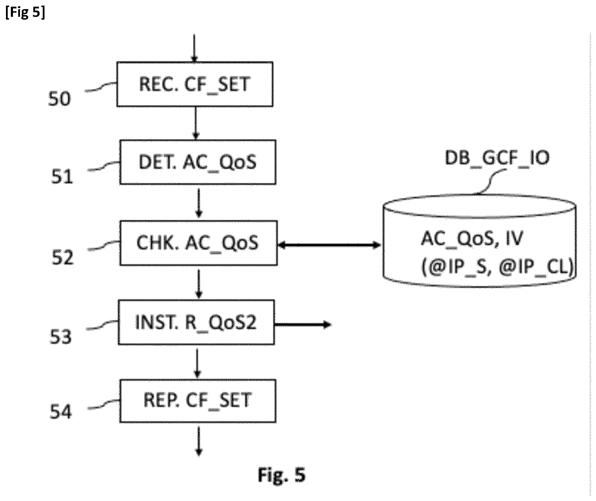

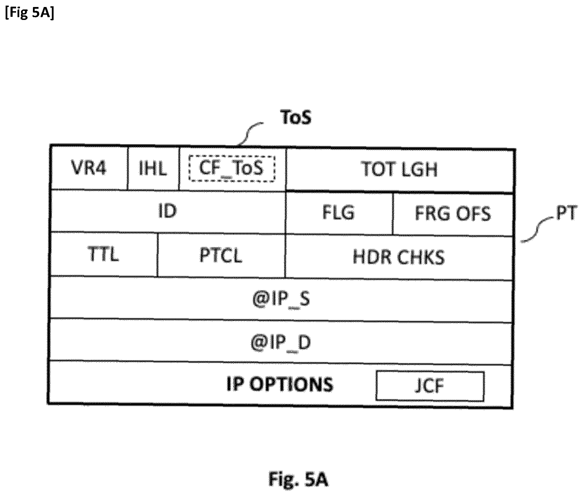

Le dispositif 400 met ainsi en oeuvre le procédé de mise à jour d'une connexion qui sera détaillé ci-après en relation avec la figure 5.

Selon un mode de réalisation, le dispositif 400 est implémenté sous la forme d'une application logicielle API_GCF de type APl, installée sur l'entité EGCF1. Avantageusement, cette application est dédiée à la mise à jour d'une connexion de l'équipement terminal E_CL avec l'équipement serveur E_S.

L'entité de gestion de la qualité de service EGCF1 peut être instanciée sous la forme d'un équipement physique dédié ou non ou bien sous forme d'entités virtualisées.

Avantageusement, l'entité de gestion de la qualité de service EGCF1 présente la structure matérielle d'un ordinateur et comprend un processeur CPU, une mémoire M4 dans laquelle sont par exemple stockés des programmes d'ordinateur, ainsi qu'un module d'émission/réception E/R qui lui permet de communiquer par au moins une interface avec d'autres équipements, tels que l'équipement de routage ER1, et d'interroger la table de données distante DB_GCF_IO. Avantageusement, elle comprend un module BILL de gestion de la facturation. Avantageusement, elle stocke dans sa mémoire M4 une copie des informations reçues de la table de données DB_GCF_IO, comme par exemple l'information d'activation du deuxième niveau de qualité de service associée à une information d'identification de l'équipement serveur, une information d'identification de l'équipement client et une information de validité (par exemple une durée de validité). Elle peut aussi stocker la règle de gestion de la qualité de service à appliquer aux paquets de données porteurs de l'information d'activation.

Dans une architecture de réseau fixe, cette entité EGCF1 peut avantageusement être intégrée dans le centre des opérations réseau NOC déjà décrit en relation avec la figure 1A.

Dans cet exemple de réalisation de l'invention, l'équipement de routage ER1 comprend un dispositif 100 de traitement d'un paquet de données échangé entre l'équipement terminal client et l'équipement serveur par l'intermédiaire du réseau de communications, configuré pour détecter dans ledit paquet de données au moins une information d'activation d'un deuxième niveau de qualité de service, ledit deuxième niveau de qualité de service à appliquer audit paquet de données, obtenir une règle de gestion de la qualité de service associée à ladite information d'activation ; et appliquer ladite règle à l'acheminement dudit paquet de données entre l'équipement client et l'équipement serveur.

Le dispositif 100 met ainsi en oeuvre le procédé de traitement d'un paquet de données qui sera détaillé ci-après en relation avec la figure 5.

Selon un mode de réalisation, le dispositif 100 est implémenté sous la forme d'une application logicielle API_GQoS de type APl, installée sur l'équipement de routage ER1. Avantageusement, cette application est dédiée à la mise à jour d'une connexion de l'équipement terminal E_CL avec l'équipement serveur E_S.

L'équipement de routage ER1 peut être instancié sous la forme d'un équipement physique dédié ou non aux fonctions respectives de cet équipement de contrôle, ou bien sous forme d'entités virtualisées.

Dans un réseau fixe de type IP/xDSL ou IP/PON, il s'agit par exemple d'une passerelle de type BNG comme illustré par la figure 1A. Dans un réseau d'accès radio mobile, il peut s'agir aussi d'un équipement de type serveur d'accès APN (de l'anglais, « Accès Point Name ») auquel un mobile se connecte pour accéder à internet.

Avantageusement, l'équipement de routage ER1 présente la structure matérielle d'un ordinateur et comprend un processeur CPU, une mémoire M1 dans laquelle sont par exemple stockés des programmes d'ordinateur, ainsi qu'un module d'émission/réception E/R qui lui permet de communiquer avec d'autres équipement du réseau et avec l'équipement client E_S. Avantageusement, il comprend aussi un module QoS de gestion de la qualité de service configuré pour appliquer une politique de gestion de la qualité de service donnée. Il comprend enfin une première file d'attente FIFO_UP configurée pour stocker temporairement les paquets de données émis par l'équipement client E_CL dans le premier réseau de communications RC1et une deuxième file d'attente FIFO_DL configurée pour stocker temporairement des paquets de données destinés à l'équipement client et en provenance du premier réseau RC1. De façon connue, l'équipement de routage ER1 est notamment configuré pour accélérer ou retarder la sortie des paquets de données des première et deuxième files d'attente FIFO_UL, FIFO_DL afin de respecter la politique de gestion de la qualité de service donnée.

Alternativement, le dispositif 100 peut être indépendant de l'équipement de routage ER1, mais connecté à celui-ci par une liaison quelconque, filaire ou non. Par exemple, il peut être intégré dans un autre équipement du réseau d'accès RC1, tel qu'un équipement d'accès radio, comme une station de base BS pour un réseau d'accès radio cellulaire par exemple. On note que selon l'architecture 5G, une station de base, appelée gNodeB, est composée de plusieurs éléments, parmi lesquels on compte une unité centrale CU (de l'anglais, « Central Unit »), une unité distribuée DU (de l'anglais, « Distributed Unit »), et une entité distante ou RU (de l'anglais, « Remote Unit »). Ces éléments sont potentiellement hébergés dans des équipements réseaux distincts. Le dispositif 100 selon l'invention pourra être embarqué dans l'une de ces trois unités, préférentiellement dans l'unité CU.

Dans l'exemple de réalisation de l'invention de la figure 2, l'équipement serveur E_S comprend un dispositif 200 de traitement d'une demande de changement de niveau de qualité de service reçue provenance de l'équipement client E_CL par l'intermédiaire du réseau de communications RC, configuré pour décider d'accepter ou non la demande de changement de niveau de qualité de service reçue, lorsqu'il a été décidé d'accepter la demande de changement de niveau de qualité de service reçue et enregistrer dans la table de données DB_GCF_IO de gestion des connexions au moins une information d'activation d'un deuxième niveau de qualité de service applicable à l'acheminement des paquets de données échangés entre ledit équipement client et ledit équipement serveur.

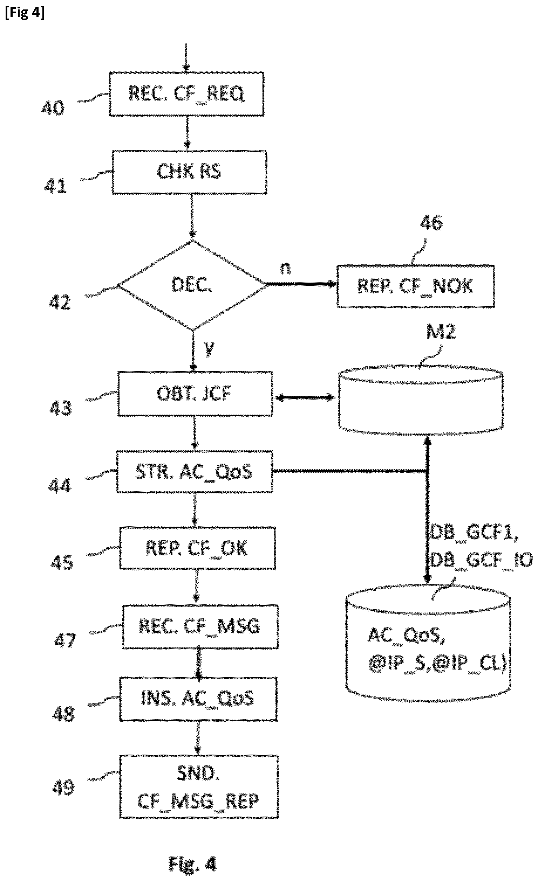

Le dispositif 100 met ainsi en oeuvre le procédé de traitement d'une demande de mise à jour de connexion qui sera détaillé ci-après en relation avec la figure 4.

Selon un mode de réalisation, il est implémenté sous la forme d'une application logicielle API_GCF_S de type APl, installée sur l'équipement serveur E_S. Avantageusement, cette application est dédiée au traitement d'une demande de mise à jour des connexions d'équipements terminaux tels que l'équipement terminal E_CL avec l'équipement serveur E_S. Avantageusement, l'équipement terminal serveur E_S présente la structure matérielle d'un ordinateur et comprend un processeur CPU, une mémoire M2 dans laquelle sont par exemple stockés des programmes d'ordinateur, ainsi qu'un module d'émission/réception E/R qui lui permet de communiquer par au moins une interface avec le réseau de communications RC à d'autres équipements terminaux, tels que l'équipement client E_CL ainsi qu'avec des équipements du réseau RC comme la table de données DB_GCF_IO.

Alternativement, le dispositif 200 peut être indépendant de l'équipement serveur E_S, mais connecté à celui-ci par une liaison quelconque, filaire ou non. Par exemple, il peut être embarqué dans n'importe quel équipement d'accès de type CPE, tel qu'une passerelle résidentielle ou professionnelle, par l'intermédiaire duquel l'équipement serveur E_S se connecte au réseau d'accès RC2.

On présente désormais, en relation avec la figure 3, sous une forme de logigramme, un exemple de mise en oeuvre d'un procédé de demande de mise à jour d'une connexion de l'équipement terminal client E_CL à l'équipement serveur E_S via le réseau de communications RC. On entend ici par connexion applicative tout échange de paquets de données entre l'équipement client et l'équipement serveur, mettant ou non en oeuvre une session de communication entre ces deux équipements.

On suppose que l'équipement terminal client E_CL accède au réseau de communications RC via le premier réseau d'accès RC1, qui applique un premier niveau de qualité de service QoS1 aux paquets de données que l'équipement client échange avec cet équipement serveur. Dans ce qui suit, ce procédé est mis en oeuvre par le dispositif 100 précité, par exemple intégré dans l'équipement terminal client E_CL.

En 30, une demande CF_REQ de changement de niveau de qualité de service est émise à destination de l'équipement serveur E_S par l'intermédiaire du réseau de communications RC. On note que cette demande peut être explicite ou implicite. Dans le premier cas, un message spécifique est envoyé à l'équipement serveur E_S ou bien un champ d'information particulier d'une demande d'établissement d'une communication avec l'équipement serveur est renseigné à une valeur donnée, destinée à être interprétée par l'équipement serveur comme une demande de changement de niveau de qualité de service. Avantageusement, le dispositif 100 peut décider au préalable si cette demande de mise à jour est nécessaire à l'aide du premier niveau de qualité de service QoS1 auquel l'équipement client a droit du fait de son abonnement, par exemple en comparant ce premier niveau de qualité de service à un seuil donné. Par exemple, il considère qu'en deçà de ce seuil, la communication avec l'équipement serveur ne pourra pas s'effectuer dans des conditions satisfaisantes et le service proposé par l'équipement serveur ne pourra pas être rendu correctement. Dans cette situation, il décide d'émettre une demande de changement de niveau de qualité de service à l'équipement serveur E_S, sinon, lorsque le seuil donné est atteint ou dépassé, il considère qu'une telle demande est inutile.

Dans le deuxième cas (implicite), c'est par exemple le simple fait d'émettre une demande d'établissement d'une communication avec l'équipement serveur E_S qui vaut demande de changement de niveau de qualité de service et qui sera interprété comme telle par l'équipement serveur E_S. La demande est donc aussi systématique.

En variante, l'équipement serveur E_S peut aussi décider de sa propre initiative qu'il va faire bénéficier à l'équipement client E_S du deuxième niveau de qualité de service suite à la demande de connexion de l'équipement client E_CL. Avantageusement, l'équipement serveur prend cette décision sur la base d'un critère donné, tel qu'un besoin ponctuel d'un niveau de ressources accru. Par exemple, il prévoit de transmettre un gros fichier de données à cet équipement client et met en oeuvre un changement de niveau de qualité de service pour cet équipement client E_CL afin que cette transmission s'opère dans de bonnes conditions.

En 31, un réponse CF_REP est reçue en provenance de l'équipement serveur E_S. Avantageusement, cette réponse comprend une information d'activation AC_QoS d'un deuxième niveau de qualité de service, ledit deuxième niveau de qualité de service QoS2 étant destiné à être appliqué aux paquets de données échangés entre l'équipement client et l'équipement serveur. Il s'agit par exemple d'une information d'identification de la connexion, comprenant au moins un couple d'adresses IP de l'équipement client et de l'équipement serveur (@IP_CL, @IP_S) . Cette information peut comprendre en outre un numéro de port source. En effet, le numéro de port spécifie un service particulier, une application ou encore une machine d'un sous-réseau de l'équipement client. L'activation de la mise à jour de la connexion peut être spécifique à un numéro de port de l'équipement client.

Selon un mode de réalisation particulier, cette information d'activation comprend un jeton de connexion JCF, par exemple généré par l'équipement serveur E_S. Du fait qu'il n'est partagé que par l'équipement serveur et l'équipement client, il offre un niveau de sécurité accru.

On note que cette réponse CF_REP n'est pas nécessairement reçue par l'équipement client E_CL sur la même interface que celle utilisée pour demander l'établissement de la connexion et, le cas échéant, demander le changement de niveau de qualité de service. Avantageusement, elle peut être reçue sur une autre interface de communication de l'équipement client E_CL avec le réseau de communication RC. Par exemple, lorsque l'équipement client E_CL est un terminal mobile équipé d'une interface de communication radio cellulaire et d'une carte SIM (de l'anglais,

« Subscriber Identification Mobile ») associée à un numéro de téléphone, la réponse CF_REP peut être reçue dans un message court de type SMS (de l'anglais, « Short Messaging System ») ou par l'intermédiaire d'un message vocal ou encore d'un courrier électronique envoyé à une adresse email de l'utilisateur de l'équipement client E_CL. Encore une autre option est que l'utilisateur valide une option offerte sur une page web (par exemple en cliquant sur une icône) envoyée par l'équipement serveur, cette validation valant requête de changement de niveau de qualité de service pour la connexion en cours. On note que la demande CF_REQ peut aussi avoir été émise sur une autre interface de communication que celle utilisée par l'équipement client E_CL pour se connecter l'équipement serveur E_S (via le réseau d'accès RC1).

En 32, le dispositif 100 émet une demande de mise à jour CF_SET de sa connexion dans son réseau d'accès RC1, à une entité de gestion de la qualité de service EGCF1. Cette demande comprend l'information d'activation AC_QoS reçue, par exemple le couple d'adresses IP (@IP_CL,@IP_S), éventuellement complétée par le numéro de port de l'équipement client ou le jeton de connexion JCF.

On note que cette demande de mise à jour est d'abord reçue par l'équipement de routage ER1, qui, du fait de sa position, reçoit tous les paquets de données et messages émis par l'équipement client E_CL, et qu'il la retransmet à l'entité de gestion EGCF1.

En 33, il reçoit une réponse de l'entité de gestion ECGF1 dudit réseau RC1. Par exemple, il s'agit d'une réponse positive CF_OK qui lui confirme que sa demande de mise à jour a été traitée et qu'il bénéficie maintenant du deuxième niveau de qualité de service QoS2 pour sa connexion avec l'équipement serveur E_S.

En 35, il émet un paquet de données à destination dudit équipement serveur E_S dans le cadre de cette connexion. Ce paquet de données comprend ladite information d'activation AC_QoS d'un deuxième niveau de qualité de service. On comprend que dans le cas où cette information d'activation comprend des champs d'informations habituellement présents dans un en-tête de ce paquet de données, comme le couple d'adresses IP (@IP_CL, @IP_S), le dispositif 100 n'a aucune action préalable à réaliser avant d'émettre le paquet de données. En revanche, lorsque l'information d'activation AC_QoS comprend le jeton de connexion JCF, il insère en 34 le jeton de connexion JCF dans un champ d'information d'un en-tête du paquet de données avant son envoi en 35.

Par exemple, le champ d'information en question est un champ inutilisé du protocole de communication. En relation avec la figure 5A, on considère à titre d'exemple le protocole IP (de l'anglais, « Internet Protocol ») et la structure d'un paquet de données IP, de type IPv4 ou IPv6. De façon connue, un tel paquet de données comprend plusieurs champs d'informations dans son en-tête. Avantageusement, on insère le jeton de connexion JCF dans un champ d'informations appelé « options », réservé à l'implémentation de fonctionnalités supplémentaires.

On présente désormais, en relation avec la figure 4, sous une forme de logigramme, un exemple de mise en oeuvre d'un procédé de traitement d'une demande de changement de niveau de qualité de service reçue par l'équipement serveur E_S en provenance de l'équipement client E_CL par l'intermédiaire du réseau de communications RC. Dans ce qui suit, ce procédé est mis en oeuvre par le dispositif 200 précité, par exemple intégré dans l'équipement serveur E_S.

En 40, le dispositif 200 reçoit une demande de changement de niveau de qualité de service CF_REQ en provenance de l'équipement client E_CL. Comme déjà décrit en relation avec la figure 3, cette demande peut être explicite ou implicite. Elle peut faire l'objet d'un message spécifique est envoyé à l'équipement serveur E_S ou bien être insérée dans un champ d'information particulier d'une demande d'établissement d'une communication avec l'équipement serveur est renseigné à une valeur donnée, destinée à être interprétée par l'équipement serveur comme une demande de changement de niveau de qualité de service.

Dans le deuxième cas (implicite), la simple réception d'une demande de connexion avec l'équipement serveur E_S est interprétée et traitée par le dispositif 200 comme une demande de changement de niveau de qualité de service et qui sera interprété comme telle par l'équipement serveur E_S. La décision de traiter une demande de connexion particulière comme une demande de changement de niveau de qualité de service peut aussi dépendre d'un type de connexion applicative avec l'équipement serveur et d'une connaissance a priori d'une nature des données qui vont être échangées (volume, latence, etc).

En 42, le dispositif 200 décide s'il accepte de répondre positivement ou négativement à cette demande. Optionnellement, dans une étape préalable 41, il vérifie les ressources disponibles, par exemple en termes de nombre de changements de qualité de service accordés à d'autres équipements clients. Par exemple, on suppose que l'équipement serveur E_S a négocié un nombre N, avec N entier non nul, par exemple égal à 10 de mises à jour concurrentes sur une période donnée et il tient à jour un compteur CT. Tant que le compteur a une valeur inférieure ou égale à N-1, il accepte la demande, sinon il la refuse.

En cas de refus, il émet en 46 une réponse négative CF_NOK.

S'il accepte la demande de l'équipement client E_CL, alors il déclare en 44 la connexion avec cet équipement client dans la table de données DB_GCF_IO. Cette déclaration comprend l'enregistrement dans une entrée de la table d'une information d'activation d'un deuxième niveau de qualité de service AC_QoS pour cette connexion avec l'équipement client E_CL. Selon un premier mode de réalisation de l'invention, cette information comprend une information d'identification de la connexion, telle que le couple d'adresses IP (@IP_CL,@IP_S). Elle est donc constituée d'informations habituellement présentes dans les messages échangés entre l'équipement client et l'équipement serveur E_S au cours de la connexion. Selon un deuxième mode de réalisation, elle comprend un jeton de connexion JCF préalablement obtenu par le dispositif 200 en 43. Par exemple, le dispositif 200 génère ce jeton de connexion JCF spécialement pour répondre à la demande de l'équipement client E_CL. Il s'agit par exemple d'un code de hachage dont le calcul peut avantageusement faire intervenir des informations d'identification et ou de localisation temporelle et spatiale de l'équipement client E_CL, comme par exemple son login, mot de passe d'accès à un service de l'équipement serveur, coordonnées GPS ou adresse postale de l'utilisateur ou encore un intervalle temporel.

De telles informations concaténées ensemble avec d'autres informations contribuent à produire, de façon connue en soi, un code unique et spécifique aux informations via l'application d'une fonction de hachage. On comprend que l'utilisation d'un tel code comme jeton de connexion offre une sécurité accrue. Elle permet aussi de valider la mise à jour de la connexion pour d'autres communications que celles ayant pour destination ou source l'équipement serveur E_S. En d'autres termes, elle permet de s'affranchir d'associer l'adresse IP de destination ou de source à l'information de validation IV_QoS dans la table de données DB_GCF_IO.

En effet, selon ce deuxième mode de réalisation, l'entrée de la table DB_GCF_IO de gestion des connexions comprend une information d'identification de la connexion, par exemple le couple (@IP_CL,@IP_S) associée audit jeton de connexion JCF.

De ce fait, l'utilisation du jeton de connexion offre une plus grande flexibilité et elle est particulièrement adaptée notamment à un cas d'usage de type travail à distance selon lequel un collaborateur se connecte au réseau de son entreprise par l'intermédiaire d'un réseau privé virtuel. Avec l'invention, il bénéficie d'une connexion facilitée pour toutes ses communications ou connexions, dès lors qu'elles sont établies par l'intermédiaire de sa connexion sécurisée au réseau intranet de son entreprise.

Avantageusement, une information de validation IV est enregistrée dans la table de données DB_GCF_IO en association avec l'information d'activation. Par exemple, il s'agit d'une durée de validité, égale à 1H. Il peut s'agir aussi d'un volume maixmal de données échangées avec le jeton de connexion (c'est-à-dire en bénéficiant de la mise à jour de QoS ou «connexion facilitée »). Si le jeton de connexion n'est pas à usage unique, l'information de validation peut aussi préciser un nombre d'utilisation du jeton.Par exemple, la table de données DB_GCF_IO est organisée comme une base de données indexée de façon à être accessible facilement, sans avoir à parcourir tous ses enregistrements, par exemple à partir de la valeur dudit jeton de connexion JCF. En variante, elle prend la forme d'un fichier de type Json.

La table de gestion des connexions DB_GCF_IO est stockée dans une mémoire locale ou distante, mais en tout état de cause accessible par le réseau de communications RC depuis n'importe quel réseau d'accès, tel que RC1 ou RC2, au réseau RC. Cette table est en effet destinée à être interrogée par les différents fournisseurs d'accès au réseau de communication RC. Cet aspect sera détaillé ci-après en relation avec la figure 5.

En 47, au moins un paquet de données CF_MSG est reçu de l'équipement client E_CL selon les conditions de la connexion mise à jour. Il comprend donc l'information d'activation AC_QoS, par exemple insérée dans un en-tête du paquet de données.

On suppose que l'équipement serveur répond à l'aide d'au moins un paquet de données CF_MSG_REP qui est donc traité par le dispositif 200. En 48, le dispositif 200 obtient l'information d'activation AC_QoS, JCF, par exemple stockée en mémoire M2 et l'insère dans un en-tête du paquet de données avant de l'envoyer en 49..

Le paquet de données CF_MSG_REP est transmis dans le réseau de communications RC. Du fait qu'il contient l'information d'activation du deuxième niveau de qualité de service, il va pouvoir être reconnu par l'équipement de routage ER1 du premier réseau RC1 et traité selon les conditions spécifiées par le deuxième niveau de qualité de service QoS2.

On présente désormais, en relation avec la figure 5, sous une forme de logigramme, un exemple de mise en oeuvre d'un procédé de gestion de la qualité de service pour une connexion entre un l'équipement terminal client E_CL et un équipement serveur E_S dans le réseau de communications RC, auquel l'équipement client accède par l'intermédiaire du premier réseau d'accès RC1. Selon le contrat souscrit par l'utilisateur de l'équipement client E_CL auprès du fournisseur d'accès opérant ce premier réseau, un premier niveau de qualité de service QoS1 est applicable aux paquets de données échangés via cette connexion.

Dans ce qui suit, ce procédé est mis en oeuvre par le dispositif 400 précité, par exemple intégré dans l'entité de gestion de la qualité de service EGCF1.

Selon cet exemple de réalisation de l'invention, le procédé comprend en 50 la réception en provenance de l'équipement client d'une demande CF_SET de mise à jour de ladite connexion de l'équipement client E_CL au réseau de communication pour les paquets de données échangés avec ledit équipement serveur. Cette demande comprend une information AC_QoS d'activation d'un deuxième niveau de qualité de service. Comme précédemment décrit, il s'agit selon un premier mode de réalisation d'informations d'identification de la connexion applicative entre l'équipement client et l'équipement serveur, par exemple le couple d'adresses IP source et destination (@IP_CL,@IP_S). Selon un deuxième mode de réalisation, cette information d'activation AC_QoS comprend un jeton de connexion JCF.

En 51, le dispositif 400 détecte cette information IAC_QoS dans la demande CF_SET de mise à jour reçue. Elle peut être comprise dans un en-tête ou dans la partie utile du message. Par exemple, on considère en particulier le cas d'un paquet de données IP dont l'en-tête présente une structure telle que celle illustrée par la figure 5A. Avantageusement, pour un tel paquet de données IP, l'information IV_QoS est comprise ans le champ d'informations « options » de cet en-tête.

En 52, le dispositif 400 vérifie la validité de cette information en interrogeant la table DB_GCF_IO de gestion des connexions au moins à l'aide de l'information d'activation AC_QoS détectée. Si cette information d'activation est le jeton de connexion JCF, la requête d'interrogation comprend en outre une information d'identification de la connexion, par exemple le couple (@IP_CL, @IP_S). En variante, l'information d'activation comprend seulement l'information d'identification de la connexion. Si une entrée est trouvée dans la table de données DB_GCF_IO , alors le dispositif 400 installe une nouvelle règle de gestion de la qualité de service R_QoS2 pour la connexion. Cette règle spécifie que le deuxième niveau de qualité de service QoS2 doit être affecté au traitement d'un paquet de données échangé dans le cadre de la connexion entre l'équipement client E_CL et l'équipement serveur E_S (dans le sens montant et/ou dans le sens descendant), lorsque ce paquet de données comprend l'information AC_QoS d'activation d'un deuxième niveau de qualité de service. Avantageusement, l'installation de cette règle RQoS2 comprend son stockage dans une mémoire M4 locale. Par exemple, cette mémoire est organisée comme une table de données qui stocke l'ensemble des règles de qualité de service à appliquer au traitement des paquets de données mis en oeuvre dans les connexions applicatives impliquant des équipements clients connectés au réseau de communication RC1. En particulier, elle comprend déjà au moins une règle R_QoS1 de gestion de la qualité de service des paquets de données échangés par l'équipement client E_CL conformément à l'abonnement auquel il a souscrit.

En variante, la règle R_QoS2 est transmise à l'équipement de routage ER1 en charge de contrôler le trafic de données entre l'équipement client E_CL et le premier réseau RC1, pour stockage. Selon un mode de réalisation de l'invention, la règle de gestion RQoS2 spécifie en outre un type de service ToS (de l'anglais, « type of Service ») à utiliser pour marquer les paquets de données qui doivent être traités en appliquant le deuxième niveau de qualité de service. Le champ Type-of-Service (ToS) permet le marquage de paquets dans le cadre d'une architecture de réseau de type DiffServ (de l'anglais, « Differentiated Service »), décrite dans le document RFC2474 intitulé

« Définition of the Differentiated Services Field (DS Field) in the IPv4 and IPv6 Headers » par l'IETF en décembre 1998, qui spécifie un mécanisme pour classer et contrôler le trafic), en différenciant la gestion de la qualité de service par type de service. DiffServ fonctionne selon un principe de classification du trafic, en plaçant chaque paquet de données dans l'une d'un nombre limité de classes de trafic (ou types de services). Chaque classe de trafic peut être gérée différemment, assurant ainsi un traitement préférentiel au trafic plus prioritaire sur le réseau. Le principe de Diffserv est que les fonctions compliquées telles que la classification et le contrôle des paquets peuvent être effectuées à la périphérie de chaque réseau traversé par le paquet de données par un équipement de routage configuré pour reconnaître la classe de trafic lue dans l'en-tête ToS et lui appliquer le traitement de QoS attendu, parce qu'il est connu de tous les réseaux mettant en oeuvre cette architecture.

Avantageusement, un type de service spécifique ToS_CF est défini pour le service de connexion facilitée proposé par l'invention.

En 54, le dispositif 400 répond la demande de mise à jour de la connexion par un message de confirmation CF_SET_OK quand la mise à jour a pu être effectuée et par un message d'erreur CS_SET_NOK sinon.

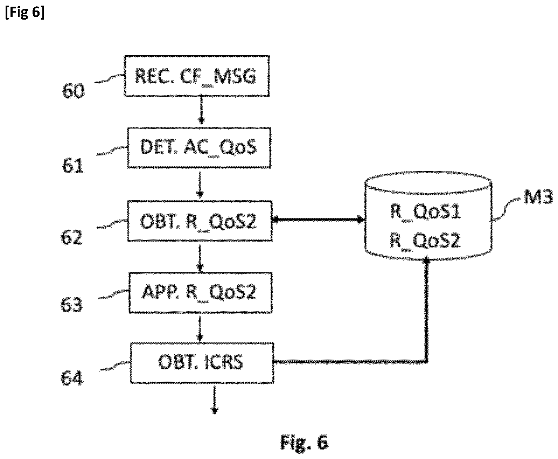

On présente désormais, en relation avec la figure 6, sous une forme de logigramme, un exemple de mise en oeuvre d'un procédé de traitement d'un paquet de données échangé entre l'équipement terminal client E_CL et l'équipement serveur E_S dans le réseau de communicationsRC, auquel l'équipement client accède par l'intermédiaire du premier réseau d'accès RC1. Selon le contrat souscrit par l'utilisateur de l'équipement client E_CL auprès du fournisseur d'accès opérant ce premier réseau, un premier niveau de qualité de service QoS1 est applicable audit paquet de données.

Selon cet exemple de réalisation de l'invention, le procédé met en oeuvre en 60 la réception d'au moins un paquet de données CF_MSG échangé entre l'équipement client E_CL et l'équipement serveur E_S. On note que ce paquet de données peut être émis par l'équipement client et destiné à l'équipement serveur ou inversement.

En 61, le dispositif 300 détecte l'information AC_QoS d'activation du deuxième niveau de qualité de service dans le paquet de données. Par exemple, cette information est comprise dans un en-tête du paquet de données ou dans sa partie utile.

En 62, le dispositif 300 obtient la règle de gestion R_QoS2 de la qualité de service associée audit deuxième niveau de qualité de service. Par exemple elle est stockée dans sa mémoire M3.

Selon une variante, lorsque le paquet de données est un paquet IP, il détecte en outre la classe de service spécifique ToS_CF dans le champ d'informations ToS de l'en-tête du paquet et il obtient IIa règle de gestion R_QoS2 associée à cette classe de service.

En 63, il applique la règle obtenue à l'acheminement dudit paquet de données CF_MSG, ce qui déclenche l'affectation de ressources réseau correspondant au deuxième niveau de qualité de service QoS2. Il en résulte que l'équipement client bénéficie d'une connexion mise à jour pour l'acheminement de paquet de données dans le cadre de la connexion qu'il a établie avec l'équipement serveur E_S.

En 64, le dispositif 300 obtient une information ICRS de comptage des ressources allouées et donc consommées pour acheminer le paquet de données dans les conditions spécifiées par le deuxième niveau de qualité de service QoS2, et la stocke par exemple en mémoire M3. Il s'agit par exemple d'un volume de données transmis, d'un débit de données, etc. Avantageusement, une telle information est obtenue et stockée pour chaque paquet de données traité selon le mécanisme de connexion facilitée de l'invention. Les informations obtenues et stockées pendant une période temporelle données seront ensuite concaténées en vue d'être transmises à une autre entité du premier réseau RC1, par exemple l'entité EGCF1 qui collecte les informations de consommation de ressources par le premier réseau RC1 avant de les retransmettre à.une entité en charge de la facturation en vue de leur refacturation au fournisseur du deuxième réseau d'accès RC2 conformément à une politique de facturation inter-opérateurs donnée.

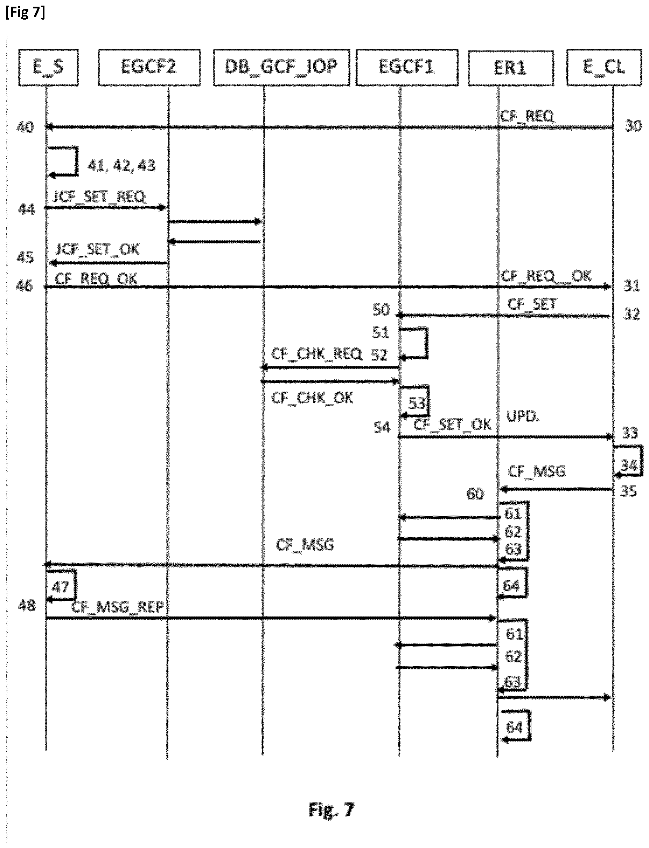

On décrit maintenant, en relation avec la figure 7, les messages échangés entre les différents équipements du système S de gestion d'un niveau de qualité de service à affecter à des paquets de données échangés dans le cadre d'une connexion applicative établie ou en cours d'établissement entre l'équipement client E_CL et l'équipement serveur E_S selon un exemple de réalisation de l'invention.

En 30, l'équipement client E_CL envoie une demande de changement de niveau de qualité de service CF_REQ à l'équipement serveur E_S pour la connexion. Elle est reçue en 40 par l'équipement serveur E_S. Cette demande peut être implicite ou explicite et transmise selon l'interface de la communication par l'intermédiaire de laquelle la connexion est en cours ou selon une autre interface. En 41-45, l'équipement serveur E_S traite la demande. Avantageusement, il vérifie qu'il dispose de droits suffisants pour accorder ce changement de niveau de qualité de service à l'équipement client E_CL et, dans l'affirmative, il obtient une information d'activation d'un deuxième niveau de qualité de service AC_QoS. Avantageusement, il génère un jeton de connexion JCF unique et l'enregistre dans une table DB_GCF_IO de gestion des connexions dédiée. Selon cet exemple de réalisation, la table DB_GCF_IO est partagée par les différents fournisseurs d'accès au réseau de communications RC. L'équipement serveur E_S n'y accède pas directement mais requiert la déclaration de l'information de validation IV_QoS = JCF auprès d'un équipement du réseau configuré pour gérer l'accès à la table DB_GCF, par exemple une entité EGCF2 de gestion de la qualité de service. Cette entité est avantageusement configurée pour enregistrer l'information d'activation AC_QoS en association avec au moins une information d'identification de la connexion. L'équipement serveur E_S reçoit une confirmation de cet enregistrement JCF_SET_OK en 45. L'équipement serveur E_S confirme en 46 à l'équipement client E_CL que sa demande a été acceptée et traitée (CF_REQ_OK). Cette confirmation comprend l'information d'activation IV_QoS, JCF. Elle est reçue par l'équipement client E_CL en 31 via l'interface de communication utilisée pour la connexion ou une autre (SMS, mail, etc). L'équipement client E_CL en extrait l'information d'activation AC_QoS, JCF et déclenche en 32 l'émission d'une requête de mise à jour CF_SET_REQ à destination de son réseau d'accès RC1L. Cette requête comprend l'information d'activation IV_QoS, JCF. Elle est reçue en 50 par l'entité de gestion de la qualité de service EGCF1. Cette dernière extrait l'information d'activation AC_QoS, JCF en 51 et utilise l'information extraite pour vérifier que la demande de mise à jour est valide auprès de la table de gestion des connexions DB_GCF_IO. En cas de réponse positive reçue en 52, l'entité EGCF1 met à jour la connexion de l'équipement client E_CL en installant une règle R_QoS2 de gestion de la qualité de service supplémentaire associée à l'information d'activation IV_QoS, JCF. Cette règle spécifie d'affecter les ressources correspondant à un deuxième niveau de qualité de service QoS2 aux paquets de données échangés dans le cadre de la connexion entre l'équipement client E_CL et l'équipement serveur E_S à la place du premier niveau de qualité de service QoS1 prévu par l'abonnement souscrit par l'utilisateur de l'équipement client auprès du fournisseur d'accès qui opère le premier réseau RC1. En 54, l'entité de gestion EGCF1 confirme à l'équipement client E_CL que la mise à jour de sa connexion est effective (CF_SET_OK). Cette confirmation est reçue en 33 par l'équipement client E_CL. En 34, il insère l'information d'activation AC_QoS, JCF dans un paquet de données CF_MSG qu'il émet à destination de l'équipement serveur E_S. Le paquet de données CF_MSG est reçu par l'équipement de routage ER1 qui détecte l'information d'activation AC_QoS, JCF présente dans le paquet, récupère la règle de gestion de qualité de service R_QoS2 et l'applique au traitement de l'acheminement du paquet (61-63). Le paquet de données est donc transmis à l'équipement serveur selon les conditions spécifiées par le deuxième niveau de qualité de service QoS2. Il est réceptionné par l'équipement serveur E_S. On suppose que ce dernier répond en émettant un paquet de données CF_MSG_REP en 48. Préalablement, il insère en 47 l'information d'activation AC_QoS, JCF du deuxième niveau de qualité de service dans le paquet de données CF_MSG_REP. De la sorte, lorsque le paquet de données arrive dans le réseau RC1 de l'équipement client E_CL, il est traité en 61-63 par l'équipement de routage ER1 en appliquant la règle de gestion de la qualité de service R_QoS2. De la sorte, le paquet de données CF_MSG_REP est lui aussi acheminé vers l'équipement client E_CL avec le deuxième niveau de qualité de service. Les ressources réseau consommées pour appliquer le deuxième niveau de qualité de service au paquet de données sont comptabilisées en 64 et stockées en mémoire, en vue d'une future facturation au fournisseur d'accès opérant le deuxième réseau RC2. Par exemple, elles sont collectées au niveau de l'entité EGCF1 qui gère les mises à jour de connexion pour tous les équipements clients du premier réseau RC1, puis éventuellement transmises à une entité de facturation dédiée.

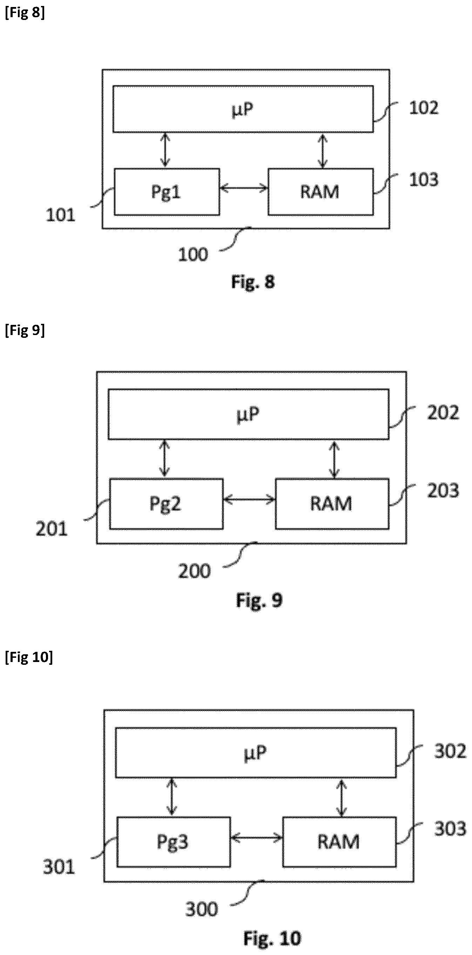

On présente ensuite, en relation avec la figure 8, un exemple de structure matérielle d'un dispositif 100 de traitement d'un paquet de données échangé entre un équipement terminal client et un équipement serveur d'un réseau de communications, auquel l'équipement client accède par l'intermédiaire d'un premier réseau de communications, ledit dispositif comprenant un module de détection dans ledit flux de données d'au moins une information d'activation d'un deuxième niveau de qualité de service à appliquer audit paquet de données, un module d'obtention d'une règle de gestion de la qualité de service associée audit deuxième niveau de qualité de service et un module d'application de ladite règle à l'acheminement dudit paquet de données entre l'équipement client et l'équipement serveur.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules précités, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir, par exemple, l'information de validation du deuxième niveau de qualité de service, la règle de gestion de la qualité de service, l'information de comptage de la quantité de ressources réseau consommée.

La figure 8 illustre seulement une manière particulière, parmi plusieurs possibles, de réaliser le dispositif 100 afin qu'il effectue les étapes du procédé de traitement d'un flux de données tel que détaillé ci-dessus, en relation avec les figures 5 et 6, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement de routage du premier réseau de communication RC1 par l'intermédiaire duquel l'équipement client accède au réseau de communications RC. Bien sûr, l'invention ne se limite pas à cet exemple, le dispositif 100 pouvant aussi être intégré à un autre équipement du premier réseau RC.

On présente ensuite, en relation avec la figure 9, un exemple de structure matérielle d'un dispositif 200 de traitement d'une demande de changement de niveau de qualité de service reçue par un équipement serveur en provenance d'un équipement client par l'intermédiaire d'un réseau de communications, auquel ledit équipement client accède par l'intermédiaire d'un premier réseau, comprenant un module de réception de ladite demande de changement de niveau de qualité de service, un module de décision d'accepter ou non la demande de changement de niveau de qualité de service reçue, un module d'enregistrement dans une table de données, dite de gestion des connexions, accessible depuis le réseau de communications, d'au moins une information de validation d'un deuxième niveau de qualité de service applicable à l'acheminement des flux échangés entre ledit équipement client et ledit équipement serveur.

Avantageusement, le dispositif 200 comprend un module d'obtention d'un jeton de connexion, un module d'enregistrement dudit jeton de connexion en tant qu'information de validation du deuxième niveau de qualité de service dans la table de données en association avec ladite information d'identification de l'équipement client et ladite information d'identification de l'équipement serveur et un module de transmission d'une réponse audit équipement client, la réponse comprenant ledit jeton de connexion.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules précités, stocké dans une mémoire morte 101 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir, par exemple, l'information de validation du deuxième niveau de qualité de service, le jeton de connexion, l'information d'identification de l'équipement client, etc.

La figure 9 illustre seulement une manière particulière, parmi plusieurs possibles, de réaliser le dispositif 200 afin qu'il effectue les étapes du procédé de traitement d'une demande de changement d'un niveau de qualité de service d'une connexion tel que détaillé ci-dessus, en relation avec les figures 4 et7, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 200 intégré dans l'équipement serveur. Bien sûr, l'invention ne se limite pas à cet exemple, le dispositif 100 pouvant aussi être intégré dans n'importe quel équipement d'accès de type CPE au réseau de communications, tel qu'une passerelle résidentielle ou professionnelle, par l'intermédiaire duquel l'équipement serveur E_S se connecte au réseau d'accès R_FAI_S.

On présente maintenant, en relation avec la figure 10, un exemple de structure matérielle d'un dispositif 300 de demande de changement de niveau de qualité de service émise par un équipement client à destination d'un équipement serveur dans un réseau de communications, auquel ledit équipement client accède par l'intermédiaire d'un premier réseau, comprenant un module de réception d'une réponse en provenance de l'équipement serveur, ladite réponse comprenant une information de validation d'un deuxième niveau de qualité de service, ledit deuxième niveau de qualité de service étant applicable aux flux de données échangés entre l'équipement client et l'équipement serveur, un module d'émission d'une demande de mise à jour de la connexion à un équipement de contrôle dudit réseau de communication, ladite demande de mise à jour comprenant ladite information de validation d'un deuxième niveau de qualité de service et un module d'émission d'un flux de données à destination dudit équipement serveur comprenant ladite information de validation d'un deuxième niveau de qualité de service. Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel dispositif 300 comprend une mémoire vive 303 (par exemple une mémoire RAM), une unité de traitement 302 équipée par exemple d'un processeur, et pilotée par un programme d'ordinateur Pg3, représentatif des modules précités, stocké dans une mémoire morte 101 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302. La mémoire vive 303 peut aussi contenir, par exemple, l'information de validation du deuxième niveau de qualité de service, l'information d'identification de l'équipement serveur, etc.

La figure 10 illustre seulement une manière particulière, parmi plusieurs possibles, de réaliser le dispositif 300 afin qu'il effectue les étapes du procédé de demande de changement d'un niveau de qualité de service d'une connexion tel que détaillé ci-dessus, en relation avec les figures 3 et 7, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 300 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 300 intégré dans l'équipement client. Bien sûr, l'invention ne se limite pas à cet exemple, le dispositif 100 pouvant aussi être intégré dans n'importe quel équipement d'accès de type CPE au réseau de communications, tel qu'une passerelle résidentielle ou professionnelle, par l'intermédiaire duquel l'équipement client E_S se connecte au réseau d'accès RC1.

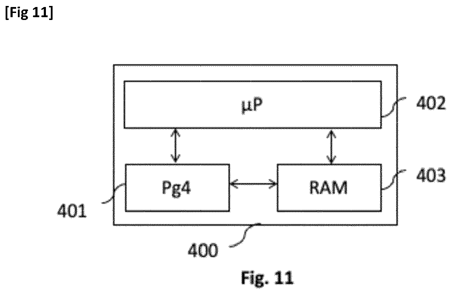

On présente enfin, en relation avec la figure 11, un exemple de structure matérielle d'un dispositif 400 de demande de gestion de la qualité de service d'une connexion entre un équipement client et un équipement serveur dans un réseau de communications, auquel ledit équipement client accède par l'intermédiaire d'un premier réseau, comprenant un module de réception en provenance de l'équipement client d'une demande de mise à jour de ladite connexion pour l'acheminement des paquets de données échangés entre ledit équipement client et ledit équipement serveur, un module de détection de l'information d'activation du deuxième niveau de qualité de service dans ladite demande de mise à jour, un module de vérification que le deuxième niveau de qualité de service est valide, par interrogation d'une table de données, dite table de gestion des connexions, au moins à partir de ladite information d'activation, un module d'installation d'une règle de gestion de la qualité de service dans le premier réseau et un module d'envoi d'une réponse à l'équipement client.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel dispositif 400 comprend une mémoire vive 403 (par exemple une mémoire RAM), une unité de traitement 402 équipée par exemple d'un processeur, et pilotée par un programme d'ordinateur Pg4, représentatif des modules précités, stocké dans une mémoire morte 101 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402. La mémoire vive 403 peut aussi contenir, par exemple, l'information de validation du deuxième niveau de qualité de service, l'information d'identification de l'équipement serveur, etc.

La figure 11 illustre seulement une manière particulière, parmi plusieurs possibles, de réaliser le dispositif 400 afin qu'il effectue les étapes du procédé de gestion de la qualité de service d'une connexion tel que détaillé ci-dessus, en relation avec les figures 5 et 7, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 400 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 400 intégré dans l'entité de gestion EGCF1. Bien sûr, l'invention ne se limite pas à cet exemple, le dispositif 400 pouvant aussi être intégré dans n'importe quel équipement du premier réseau RC1 et notamment dans l'équipement de routage ER1.

L'invention qui vient d'être présentée présente de nombreux avantages. Elle propose de dépasser la gestion statique de la qualité de service à la source qui est mise en oeuvre aujourd'hui, par une gestion de la qualité de service dynamique qui peut dans certaines conditions être déterminée par la destination. L'invention offre ainsi la possibilité d'aller au-delà d'un premier niveau de qualité de service contractuel affecté à un équipement client et de lui donner le bénéfice d'un deuxième niveau de qualité de service, supérieur au premier, pour une ou plusieurs connexions applicatives avec un équipement serveur. Ce deuxième niveau de qualité de service est spécifié par un contrat qui lie l'entité qui gère l'équipement serveur à son fournisseur d'accès et c'est l'équipement serveur qui décide dans quelles conditions et à quel équipement client il accorde ce changement de niveau de qualité de service.

La connexion applicative concernée est ensuite qualifiée par un attribut (information d'activation du deuxième niveau de qualité de service, par exemple un jeton de connexion) enregistré dans une table de données accessible depuis le réseau de communication par les différents opérateurs de réseaux d'accès. Cet attribut est inséré dans les paquets de données échangés entre l'équipement client et l'équipement serveur, ce qui permet au réseau d'accès de l'équipement client de leur appliquer le deuxième niveau de qualité de service déterminé par la destination à la place du premier niveau de qualité de service dans le cadre de la connexion applicative, de tracer la consommation de ressources induite par ce changement et de facturer le fournisseur d'accès de l'équipement serveur.

L'invention fournit ainsi les bases d'un nouveau service pour les fournisseurs d'accès à Internet, destinés à leurs abonnés, notamment professionnels, qui gèrent un ou plusieurs équipements serveurs auxquels se connectent des équipements clients. Ce service permet à un équipement serveur d'offrir à tout ou partie des équipements clients qui se connectent à lui un niveau de qualité de service donné et garanti, de sorte à faciliter l'accès à ses services.

Les cas d'usage visés sont nombreux et concernent notamment les secteurs économiques suivants :
- le commerce électronique ou e-commerce : l'invention permet notamment de faciliter l'accès à un portail de vente en ligne à des utilisateurs d'équipements clients ayant une connexion internet contrainte non pas du fait de l'infrastructure physique existante, mais de l'abonnement auquel ils ont souscrit auprès de leur fournisseur d'accès (connexion domestique bas débit ou une connexion mobile avec un volume de données mensuel faible ou épuisé). L'entité qui gère l'équipement serveur négocie un contrat de connexion facilitée avec son fournisseur d'accès internet, en termes de niveau de qualité de service, de volume de données, de débit de données, d'un nombre de connexions facilitées simultanées etc et prend en charge les frais supplémentaires pour les utilisateurs de son site web. Avantageusement, il peut faire évoluer son modèle économique en ajoutant des frais supplémentaires modiques à chaque transaction conclue avec un équipement client qui a bénéficié d'une connexion facilitée, ce qui lui permettra de financer le surcoût de ce contrat ;
- l'accès distant au réseau intranet d'une entreprise via un réseau privé virtuel de type VPN (de l'anglais, « Virtual Private Network ») pour les collaborateurs de cette entreprise. L'invention permet d'offrir aux collaborateurs un accès homogène au réseau de l'entreprise, sans que l'employeur n'ait plus à subventionner au cas par cas l'installation internet de ses collaborateurs ;
- l'enseignement à distance depuis une plateforme web. L'invention permet de garantir un niveau de connectivité homogène à l'ensemble des participants ;
- la téléconsultation ;
- les relations client en mode B2B (de l'anglais, « Business to Business »), pour faciliter la mise en oeuvre d'une session de démonstration à distance d'un produit par un groupe industriel à ses clients, qui peuvent être connectés via des équipements et interfaces variés ;
etc.

## Revendications

1. Procédé de traitement d'un paquet de données échangé entre un équipement terminal client (E_CL) et un équipement serveur (E_S) dans un réseau de communications (RC), auquel l'équipement client accède par l'intermédiaire d'un premier réseau de communications (RC1), **caractérisé en ce que**, un premier niveau de qualité de service (QoS_1) étant destiné à être appliqué audit paquet de données, ledit procédé est mis en oeuvre par un équipement de routage (ER1) dudit premier réseau de communications (RC1) et comprend :
- la détection (61) dans ledit paquet de données d'au moins une information d'activation (AC_QOS) d'un deuxième niveau de qualité de service (QoS_2) à appliquer audit paquet de données;
- l'obtention (62) d'une règle de gestion de la qualité de service (R_QoS2) selon le deuxième niveau de qualité de service, associée à ladite information d'activation (AC-QoS) ;
- l'application (63) du deuxième niveau de qualité de service à l'acheminement dit paquet de données selon la règle obtenue, à la place du premier niveau de qualité de service (QoS1).

2. Procédé de traitement d'un paquet de données selon la revendication 1, **caractérisé en ce que** l'information d'activation d'un deuxième niveau de qualité de service (AC_QoS) comprend une information d'identification d'une source du paquet de données et une information d'identification d'une destination du paquet de données.

3. Procédé de traitement d'un paquet de données selon l'une quelconque des revendications 1 et 2, **caractérisé en ce que** l'information d'activation d'un deuxième niveau de qualité de service (AC_QoS) comprend un jeton de connexion (JCF).

4. Procédé de traitement d'un paquet de données selon l'une quelconque des revendications précédentes, **caractérisé en ce que** ladite règle de gestion de la qualité de service (R_QoS2) comprend une information relative à un type de service (CF_ToS) et **en ce que** l'application de ladite règle comprend l'insertion de ladite information (CF_ToS) dans un en-tête du paquet de données.

5. Procédé de traitement d'un paquet de données selon l'une quelconque des revendications précédentes, **caractérisé en ce qu'**il comprend l'obtention (64) d'une information de comptage d'une quantité de ressources allouées pour l'acheminement dudit flux en application du deuxième niveau de qualité de service et l'enregistrement de ladite information.

6. Procédé de traitement d'une demande de changement de niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, ladite demande étant reçue par un équipement serveur (E_S) en provenance d'un équipement client (E_CL) dans un réseau de communications (RC), auquel ledit équipement client par l'intermédiaire d'un premier réseau (RC1) d'un fournisseur d'accès, caractérisé qu'il est mis en oeuvre par l'équipement serveur et en ce qu'il comprend, sur réception (40) de ladite demande (CF_REQ) de changement de niveau de qualité de service :
- la décision (42) d'accepter ou non la demande de changement de niveau de qualité de service reçue ;
- lorsqu'il a été décidé d'accepter la demande de changement de qualité de service, l'enregistrement (44) dans une table de données (DB_GCF_IO), dite de gestion des connexions, accessible depuis le réseau de communications, d'au moins une information (AC_QoS) d'activation d'un deuxième niveau de qualité de service applicable à l'acheminement des paquets de données échangés entre ledit équipement client et ledit équipement serveur ;
- la transmission (45) d'une réponse à l'équipement client.

7. Procédé de traitement d'une demande de changement de niveau de qualité de service selon la revendication précédente, **caractérisé en ce qu'**il comprend en outre :
- l'obtention (43) d'un jeton de connexion,
- l'enregistrement (44) dudit jeton de connexion en tant qu'information d'activation du deuxième niveau de qualité de service dans la table de données (DB_JCF) en association avec ladite information d'identification de l'équipement client et ladite information d'identification de l'équipement serveur; et
**en ce que** la réponse à l'équipement client comprend ledit jeton de connexion.

8. Procédé de demande de changement de niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexions, caractérisé qu'il est mis en oeuvre par l'équipement client et en ce qu'il comprend :
- la réception (31) d'une réponse en provenance de l'équipement serveur, ladite réponse (CF_REP) comprenant une information d'activation d'un deuxième niveau de qualité de service, ledit deuxième niveau de qualité de service étant applicable aux paquets de données échangés entre l'équipement client et l'équipement serveur ;
- l'émission (32) d'une demande (CF_SET) de mise à jour de la connexion à un équipement de contrôle dudit réseau de communication, ladite demande de mise à jour comprenant ladite information d'activation d'un deuxième niveau de qualité de service ;
- l'insertion (34) de l'information d'activation d'un deuxième niveau de qualité de service dans un paquet de données et l'émission (35) dudit paquet de données dans le premier réseau de communications.

9. Procédé de gestion d'une qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, **caractérisé en ce qu'**il est mis en oeuvre par une entité de gestion de la qualité de service (EGCF) du premier réseau et comprend :
- la réception (60) en provenance de l'équipement client (E_CL) d'une demande (CF_SET) de mise à jour de ladite connexion pour l'acheminement de paquets de données échangés entre ledit équipement client et ledit équipement serveur;
- la détection (61) d'une information d'activation (AC_QoS) du deuxième niveau de qualité de service dans ladite demande de mise à jour ;
- la vérification (62) d'une validité de l'information d'activation, par interrogation d'une table de données, dite table de gestion des connexions, au moins à partir de ladite information d'activation et d'une information d'identification de l'équipement serveur; et
- l'installation (63) d'une règle de gestion de la qualité de service selon le deuxième niveau de qualité de service associée à ladite information d'activation du deuxième niveau de qualité de service pour ladite connexion et
- la transmission (64) d'une réponse à l'équipement client.

10. Dispositif (100) de traitement d'un flux de données échangé entre un équipement terminal client et un équipement serveur par l'intermédiaire d'un réseau de communications, auquel l'équipement client est connecté avec un premier niveau de qualité de service, **caractérisé en ce que** ledit dispositif est configuré pour mettre au niveau d'un équipement dudit réseau de communications :
- la détection dans ledit flux de données d'au moins une information de validation d'un deuxième niveau de qualité de service à appliquer audit paquet de données;
- l'obtention d'une règle de gestion de la qualité de service selon le deuxième niveau de qualité de service, associée à ladite information d'activation ; et
- l'application du deuxième niveau de qualité de service à l'acheminement dit paquet de données selon la règle obtenue, à la place du premier niveau de qualité de service.

11. Dispositif (200) de traitement d'une demande de changement de niveau de qualité d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, ladite demande étant reçue par un équipement serveur en provenance d'un équipement client par l'intermédiaire d'un réseau de communications, auquel ledit équipement client est connecté selon un premier niveau de qualité de service, caractérisé qu'il est configuré pour mettre en oeuvre au niveau de l'équipement serveur :
- la décision d'accepter ou non la demande de changement de niveau de qualité de service reçue ;
- lorsqu'il a été décidé d'accepter la demande de changement de niveau de qualité de service reçue, l'enregistrement dans une table de données, dite de gestion des connexions, d'au moins une information de validation d'un deuxième niveau de qualité de service applicable à l'acheminement des flux échangés dans le cadre d'une communication entre ledit équipement client et ledit équipement serveur.

12. Dispositif (300) de demande de changement d'un niveau de qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexions, caractérisé qu'il est configuré pour mettre en oeuvre au niveau de l'équipement client :
- la réception d'une réponse en provenance de l'équipement serveur, ladite réponse (CF_REP) comprenant une information d'activation d'un deuxième niveau de qualité de service, ledit deuxième niveau de qualité de service étant applicable aux paquets de données échangés entre l'équipement client et l'équipement serveur ;
- l'émission d'une demande (CF_SET) de mise à jour de la connexion à un équipement de contrôle dudit réseau de communication, ladite demande de mise à jour comprenant ladite information d'activation d'un deuxième niveau de qualité de service ;
- l'insertion de l'information d'activation d'un deuxième niveau de qualité de service dans un paquet de données et l'émission dudit paquet de données dans le premier réseau de communications.

13. Dispositif (400) de gestion d'une qualité de service d'une connexion d'un équipement client à un équipement serveur dans un réseau de communication auquel accède l'équipement client par l'intermédiaire d'un premier réseau de communication, un premier niveau de qualité de service étant appliqué par le premier réseau de communication à des paquets de données échangés dans ladite connexion, **caractérisé en ce qu'**il est configuré pour mettre en oeuvre au niveau d'une entité de gestion de la qualité de service du premier réseau :
- la réception en provenance de l'équipement client (E_CL) d'une demande (CF_SET) de mise à jour de ladite connexion pour l'acheminement de paquets de données échangés entre ledit équipement client et ledit équipement serveur;
- la détection d'une information d'activation (AC_QoS) du deuxième niveau de qualité de service dans ladite demande de mise à jour ;
- la vérification d'une validité de l'information d'activation, par interrogation d'une table de données (DB_GCF_IO, DB_GCF1), dite table de gestion des connexions, au moins à partir de ladite information d'activation et d'une information d'identification de l'équipement serveur; et
- lorsqu'il a été vérifié que l'information d'activation est valide, l'enregistrement de l'information d'activation dans une mémoire en association avec l'information d'identification de l'équipement serveur et une information d'identification de l'équipement client ;
- l'installation d'une règle de gestion de la qualité de service associée au deuxième niveau de qualité de service pour ladite connexion et
- la transmission d'une réponse à l'équipement client.

14. Système (S) de gestion de la qualité de service appliquée à des paquets de données échangés entre un équipement client et un équipement serveur dans un réseau de communications, auquel ledit équipement client accède par l'intermédiaire d'un premier réseau de communications, **caractérisé en ce qu'**il comprend un dispositif (100) de traitement d'un flux de données échangé entre l'équipement terminal client et l'équipement serveur selon la revendication 10, un dispositif (200) de traitement d'une demande de changement de niveau de qualité de service selon la revendication 11, un dispositif (300) de demande de changement de niveau de qualité de service selon la revendication 12, un dispositif de gestion de la qualité de service selon la revendication 13 et un support d'enregistrement d'une table de données, ladite table de données (DB_GCF_IO) comprenant des entrées, une entrée comprenant au moins une information d'activation d'un deuxième niveau de qualité de service associée à une information d'identification d'un équipement serveur et une information d'identification d'un équipement client.

15. Programme d'ordinateur comprenant des instructions de code de programme pour la mise en oeuvre d'un procédé selon l'une quelconque des revendications 1 à 9, lorsqu'il est exécuté par un processeur.
